# EUROPEAN PATENT APPLICATION

(11) **EP 4 818 562 A1**
(43) Date of publication of application: **07.10.2026**
(21) Application number: 24912184.9
(22) Date of filing: 28.11.2024
(51) Int. Cl.: F16L 1/00, F16L 1/09, F16L 1/028

(54) **PIPE JOINING DEVICE AND PIPE JOINING METHOD**

(30) Priority: 27.12.2023 JP 2023221998
(71) Applicant: Kubota Corporation, Osaka-shi, Osaka 530-0011 (JP)
(72) Inventor: ITO Kazuya, Amagasaki-shi, Hyogo 660-0095 (JP); ODA Keita, Amagasaki-shi, Hyogo 660-0095 (JP)
(74) Representative: Müller-Boré & Partner Patentanwälte PartG mbB
(86) International application number: PCT/JP2024/042095
(87) International publication number: WO 2025/142294

(57) **Abstract**

A pipe joining device is provided that is capable of determining whether there is a joining abnormality between a spigot of a pipe and a socket of a joint-target pipe during joining work between the spigot of the pipe and the socket of the joint-target pipe, and efficiently performing the joining work. A pipe joining device 1 includes a joint-target pipe attachment part to be attached to a socket side of a joint-target pipe, a pair of pipe grasping parts 31 and 32 configured to grasp a spigot side of a pipe, a movement part 36 configured to move the pair of pipe grasping parts 31 and 32 in an axial direction so as to join the spigot of the pipe and the socket of the joint-target pipe to each other in the axial direction, a driving force detector 61 configured to detect a driving force of the movement part 36 during movement of the pair of pipe grasping parts 31 and 32 in the axial direction, and a determiner 71 configured to determine a joining condition between the spigot of the pipe and the socket of the joint-target pipe based on the driving force of the movement part 36 detected by the driving force detector 61.

## Description

### TECHNICAL FIELD

The present disclosure relates to a pipe joining device and a method for joining pipes, for joining a spigot of a pipe to a socket of a joint-target pipe to be joined to the pipe.

### BACKGROUND ART

In laying ductile cast-iron pipes (an example of water pipes) each having a spigot and a socket, pipe joining work of joining a pipe to a joint-target pipe disposed in a trench in the ground is performed. In this pipe joining work, a worker is required to first suspend and bring down the pipe to be joined to the joint-target pipe into the trench. Thereafter, the worker is required to align the centers of the pipe and the joint-target pipe in the trench and insert the spigot of the pipe into the socket of the joint-target pipe to join the spigot and the socket to each other.

In such conventional pipe joining work, the worker is required to suspend and bring the pipe down into the trench while confirming the position of the pipe relative to the joint-target pipe in the trench. In addition, the worker is required to manually align the centers of the pipe and the joint-target pipe in the trench.

As described above, the conventional pipe joining work puts a large work burden on the worker and requires the work to be performed in a narrow trench, and thus the workability is not very good.

In response to this, mechanization of the pipe joining work has been proposed in order to reduce the work burden on the worker. For example, Patent Literature 1 discloses a pipe joining device configured to clamp a socket of a pipe and a spigot of a joint-target pipe, respectively, so as to insert the spigot into the socket. The pipe joining device includes a spigot clamp and a socket clamp. The spigot clamp is provided with a position setting member. The position setting member includes a contact part positioned at one axial end of the position setting member and an optical white line detection sensor. In the pipe joining device, the spigot clamp clamping the pipe is moved in one axial direction of the pipe by a hydraulic cylinder to insert the spigot into the socket of the joint-target pipe. Furthermore, in the pipe joining device, when the spigot comes within a predetermined distance of the socket, the contact part comes into contact with the end surface of the socket. In addition, a white line is applied to the outer surface of the spigot at a position separated by a predetermined distance from one axial end of the pipe. When the white line detection sensor reads the white line while the pipe is moved in one axial direction of the pipe as described above, the operation of the hydraulic cylinder is stopped.

### CITATION LIST

### PATENT LITERATURE

[Patent Literature 1] Japanese Laid-Open Patent Publication No. H04-357383

### SUMMARY OF INVENTION

### TECHNICAL PROBLEM

In the pipe joining device of Patent Literature 1, insertion of the spigot into the socket of the pipe joint by a predetermined amount is detected by the white line sensor. For this reason, in the pipe joining device of Patent Literature 1, although the insertion amount of the pipe can be measured, there is a possibility that the joining condition inside the socket of the joint-target pipe cannot be ascertained. Therefore, in the pipe joining device of Patent Literature 1, it is desirable to achieve both efficiency of the joining work and determination of the joining condition during the joining work between the spigot of the pipe and the socket of the joint-target pipe.

Therefore, there is a need for a pipe joining device that is capable of determining the joining condition between the spigot of the pipe and the socket of the joint-target pipe during the joining work between the spigot of the pipe and the socket of the joint-target pipe, while improving the efficiency of the joining work.

It is an object of the present disclosure to provide a pipe joining device that is capable of determining whether there is a joining abnormality between the spigot of the pipe and the socket of the joint-target pipe during the joining work between the spigot of the pipe and the socket of the joint-target pipe and efficiently performing the joining work.

### SOLUTION TO PROBLEM

A pipe joining device according to one embodiment of the present disclosure is a device for joining a spigot of a pipe having the spigot and a socket to a socket of a joint-target pipe having a spigot and the socket. The pipe joining device includes a joint-target pipe attachment part to be attached to a socket side of the joint-target pipe, pipe grasping parts configured to grasp a spigot side of the pipe, a movement part configured to move at least one of the joint-target pipe attachment part and the pipe grasping parts in an axial direction so as to join the spigot of the pipe and the socket of the joint-target pipe to each other in the axial direction, a driving force detector configured to detect a driving force of the movement part during movement of at least one of the joint-target pipe attachment part and the pipe grasping parts in the axial direction, and a determiner configured to determine a joining condition between the spigot of the pipe and the socket of the joint-target pipe based on the driving force of the movement part detected by the driving force detector (first configuration).

In the configuration described above, when joining the spigot of the pipe and the socket of the joint-target pipe, the determiner determines a joining condition between the spigot of the pipe and the socket of the joint-target pipe based on the driving force of the movement part detected by the driving force detector. That is, the determiner indirectly determines, by the driving force, the joining condition inside the socket of the joint-target pipe that cannot be visually confirmed during the joining work. Therefore, it is possible to determine, in real time during the joining work between the spigot of the pipe and the socket of the joint-target pipe, whether there is a joining abnormality between the spigot of the pipe and the socket of the joint-target pipe. As a result, it is possible to efficiently perform the joining work between the spigot of the pipe and the socket of the joint-target pipe.

In the first configuration, the pipe joining device further includes a pipe position detector configured to detect a position of the pipe relative to the joint-target pipe. The determiner is configured to determine, based on an allowable range of the driving force that is defined for each position of the pipe, that the joining condition between the spigot of the pipe and the socket of the joint-target pipe is abnormal when the driving force detected by the driving force detector at the position of the pipe detected by the pipe position detector falls outside the allowable range of the driving force (second configuration).

In the configuration described above, when joining the spigot of the pipe and the socket of the joint-target pipe, the joining condition between the spigot of the pipe and the socket of the joint-target pipe is determined by the driving force for each position of the pipe relative to the joint-target pipe. That is, the controller determines the joining condition inside the socket of the joint-target pipe that cannot be visually confirmed during the joining work, by the driving force corresponding to the joining stage between the socket of the joint-target pipe and the spigot of the pipe. Therefore, it is possible to accurately determine, in real time during the joining work between the spigot of the pipe and the socket of the joint-target pipe, whether there is a joining abnormality between the spigot of the pipe and the socket of the joint-target pipe. As a result, it is possible to efficiently perform the joining work between the spigot of the pipe and the socket of the joint-target pipe.

In the first configuration, the pipe joining device further includes a pipe position detector configured to detect a position of the pipe relative to the joint-target pipe. The determiner is configured to determine, based on an allowable range of a rate of change of the driving force per unit movement distance of the pipe, the allowable range being defined based on the position of the pipe, that the joining condition between the spigot of the pipe and the socket of the joint-target pipe is abnormal when the rate of change of the driving force per unit movement distance of the pipe that is calculated based on the position of the pipe detected by the pipe position detector and the driving force detected by the driving force detector at the position of the pipe falls outside the allowable range of the rate of change of the driving force (third configuration).

In the configuration described above, when joining the spigot of the pipe and the socket of the joint-target pipe, the joining condition between the spigot of the pipe and the socket of the joint-target pipe is determined by the rate of change of the driving force for each unit movement distance of the pipe relative to the joint-target pipe. That is, the determiner determines the joining condition between the socket of the joint-target pipe and the spigot of the pipe that cannot be visually confirmed during the joining work, by the rate of change of the driving force corresponding to the joining stage between the socket of the joint-target pipe and the spigot of the pipe. Therefore, it is possible to accurately determine, in real time during the joining work between the spigot of the pipe and the socket of the joint-target pipe, whether there is a joining abnormality between the spigot of the pipe and the socket of the joint-target pipe. As a result, it is possible to efficiently perform the joining work between the spigot of the pipe and the socket of the joint-target pipe.

In any one of the first to third configurations, the pipe joining device further includes a signal output part configured to output a control signal to the movement part. The signal output part is configured to output, to the movement part, a control signal for stopping movement of the joint-target pipe attachment part and the pipe grasping parts when the determiner determines that the joining condition between the spigot of the pipe and the socket of the joint-target pipe is abnormal (fourth configuration).

In the configuration described above, when the joining condition between the spigot of the pipe and the socket of the joint-target pipe is abnormal, the joining work between the spigot of the pipe and the socket of the joint-target pipe by the movement part is suspended. Therefore, it is possible to easily detach the spigot of the pipe from the socket of the joint-target pipe and perform the joining work again. As a result, it is possible to efficiently perform the joining work between the spigot of the pipe and the socket of the joint-target pipe.

In the fourth configuration, the pipe joining device further includes an operation instruction receiver configured to generate a control signal in accordance with an operation instruction to the movement part by a worker; and a manual operation switcher configured to switch an operation mode to a manual operation mode that enables the operation instruction receiver to output the control signal to the movement part in accordance with the operation instruction. The manual operation switcher is configured to switch the operation mode to the manual operation mode when the signal output part outputs, to the movement part, the control signal for stopping movement of the joint-target pipe attachment part and the pipe grasping parts (fifth configuration).

In the configuration described above, when a control signal for stopping movement of the joint-target pipe attachment part and the pipe grasping parts is output to the movement part, the manual operation mode is entered, in which the movement part is operated based on an operation instruction to the movement part by the worker. Thus, for example, the detachment work of detaching the spigot of the pipe from the socket of the joint-target pipe can be performed by the operation instruction to the movement part by the worker. Therefore, there is no need to remove the pipe grasping parts from the spigot of the pipe and perform the detachment work manually by the worker. As a result, it is possible to efficiently perform the joining work between the spigot of the pipe and the socket of the joint-target pipe.

In the fifth configuration, the manual operation switcher is configured to enable only the control signal for the movement part generated by the operation instruction receiver to be output to the movement part when the manual operation mode is entered (sixth configuration).

In the configuration described above, when the manual operation mode is entered, only the control signal for the movement part generated by the operation instruction receiver in accordance with the operation instruction from the worker is output to the movement part. Therefore, the pipe joining device does not perform the joining work between the spigot of the pipe and the socket of the joint-target pipe by a control signal other than the control signal generated in accordance with the operation instruction from the worker. As a result, it is possible to more reliably perform the detachment work between the spigot of the pipe and the socket of the joint-target pipe.

In the first configuration, the pipe joining device further includes a joining completion determiner configured to determine completion of joining between the spigot of the pipe and the socket of the joint-target pipe, and an evaluator configured to evaluate the joining condition between the spigot of the pipe and the socket of the joint-target pipe based on a history of the driving force of the movement part detected by the driving force detector during a period from start of joining between the spigot of the pipe and the socket of the joint-target pipe to completion of the joining. The evaluator evaluates the joining condition between the spigot of the pipe and the socket of the joint-target pipe when the joining completion determiner determines that the joining between the spigot of the pipe and the socket of the joint-target pipe has been completed (seventh configuration).

In the configuration described above, the evaluator evaluates the joining condition between the spigot of the pipe and the socket of the joint-target pipe based on a history of the driving force of the movement part detected by the driving force detector during a period from start of joining between the spigot of the pipe and the socket of the joint-target pipe to completion of the joining. That is, the evaluator comprehensively evaluates the joining condition inside the socket of the joint-target pipe based on the history of the driving force of the movement part after completion of joining between the spigot of the pipe and the socket of the joint-target pipe. Therefore, not only can a determination based on the joining condition during the joining work be performed, but the joined state between the spigot of the pipe and the socket of the joint-target pipe can also be evaluated. As a result, it is possible to efficiently perform the joining work between the spigot of the pipe and the socket of the joint-target pipe.

A method for joining pipes according to one embodiment of the present disclosure is a method for joining a spigot of a pipe to a socket of a joint-target pipe to be joined to the pipe. The method includes a joint-target pipe attaching step of attaching a joint-target pipe attachment part to a socket side of the joint-target pipe, a pipe grasping step of grasping, by pipe grasping parts, a spigot side of the pipe, a moving step of moving, by a movement part, at least one of the joint-target pipe attachment part and the pipe grasping parts in an axial direction so as to join the spigot of the pipe and the socket of the joint-target pipe to each other in the axial direction, a driving force detecting step of detecting, by a driving force detector, a driving force of the movement part during movement of at least one of the joint-target pipe attachment part and the pipe grasping parts in the axial direction, and a determining step of determining, by a determiner, a joining condition between the spigot of the pipe and the socket of the joint-target pipe based on the driving force of the movement part detected by the driving force detector (eighth configuration).

In the configuration described above, when joining the spigot of the pipe and the socket of the joint-target pipe, the determiner determines a joining condition between the spigot of the pipe and the socket of the joint-target pipe based on the driving force of the movement part detected by the driving force detector. That is, the determiner indirectly determines, by the driving force, the joining condition inside the socket of the joint-target pipe that cannot be visually confirmed during the joining work. Therefore, it is possible to determine, in real time during the joining work between the spigot of the pipe and the socket of the joint-target pipe, whether there is a joining abnormality between the spigot of the pipe and the socket of the joint-target pipe. As a result, it is possible to efficiently perform the joining work between the spigot of the pipe and the socket of the joint-target pipe.

In the eighth configuration, the method for joining pipes further includes a pipe position detecting step of detecting, by a pipe position detector, a position of the pipe relative to the joint-target pipe. In the determining step, the joining condition between the spigot of the pipe and the socket of the joint-target pipe is determined to be abnormal based on an allowable range of the driving force that is defined for each position of the pipe, when the driving force detected by the driving force detector at the position of the pipe detected by the pipe position detector falls outside the allowable range of the driving force (ninth configuration).

In the configuration described above, when joining the spigot of the pipe and the socket of the joint-target pipe, the joining condition between the spigot of the pipe and the socket of the joint-target pipe is determined by the driving force for each position of the pipe relative to the joint-target pipe. That is, the controller determines the joining condition inside the socket of the joint-target pipe that cannot be visually confirmed during the joining work, by the driving force corresponding to the joining stage between the socket of the joint-target pipe and the spigot of the pipe. Therefore, it is possible to accurately determine, in real time during the joining work between the spigot of the pipe and the socket of the joint-target pipe, whether there is a joining abnormality between the spigot of the pipe and the socket of the joint-target pipe. As a result, it is possible to efficiently perform the joining work between the spigot of the pipe and the socket of the joint-target pipe.

In the eighth configuration, the method for joining pipes further includes a pipe position detecting step of detecting, by a pipe position detector, a position of the pipe relative to the joint-target pipe. In the determining step, the joining condition between the spigot of the pipe and the socket of the joint-target pipe is determined to be abnormal based on an allowable range of a rate of change of the driving force per unit movement distance of the pipe, the allowable range being defined based on the position of the pipe, when the rate of change of the driving force per unit movement distance of the pipe that is calculated based on the position of the pipe detected by the pipe position detector and the driving force detected by the driving force detector at the position of the pipe falls outside the allowable range of the rate of change of the driving force (tenth configuration).

In the configuration described above, when joining the spigot of the pipe and the socket of the joint-target pipe, the joining condition between the spigot of the pipe and the socket of the joint-target pipe is determined by the rate of change of the driving force for each unit movement distance of the pipe relative to the joint-target pipe. That is, the controller determines the joining condition between the socket of the joint-target pipe and the spigot of the pipe that cannot be visually confirmed during the joining work, by the rate of change of the driving force corresponding to the joining stage between the socket of the joint-target pipe and the spigot of the pipe. Therefore, it is possible to accurately determine, in real time during the joining work between the spigot of the pipe and the socket of the joint-target pipe, whether there is a joining abnormality between the spigot of the pipe and the socket of the joint-target pipe. As a result, it is possible to efficiently perform the joining work between the spigot of the pipe and the socket of the joint-target pipe.

In any one of the eighth to tenth configurations, the method for joining pipes further includes a signal output step of outputting, by a signal output part, a control signal to the movement part. In the signal output step, a control signal for stopping movement of the joint-target pipe attachment part and the pipe grasping parts is transmitted to the movement part when the joining condition between the spigot of the pipe and the socket of the joint-target pipe is determined to be abnormal in the determining step (eleventh configuration).

In the configuration described above, when the joining condition between the spigot of the pipe and the socket of the joint-target pipe is abnormal, the joining work between the spigot of the pipe and the socket of the joint-target pipe by the movement part is suspended. Therefore, it is possible to easily detach the spigot of the pipe from the socket of the joint-target pipe and perform the joining work again. As a result, it is possible to efficiently perform the joining work between the spigot of the pipe and the socket of the joint-target pipe.

In the eleventh configuration, the method for joining pipes further includes a manual operation switching step of switching, by a manual operation switcher, an operation mode to a manual operation mode that enables an operation part to transmit the control signal to the movement part.

In the manual operation switching step, the manual operation mode is entered when the signal output part outputs, to the movement part, the control signal for stopping movement of the joint-target pipe attachment part and the pipe grasping parts (twelfth configuration).

In the configuration described above, when a control signal for stopping movement of the joint-target pipe attachment part and the pipe grasping parts is output to the movement part, the manual operation mode is entered, in which the movement part is operated based on an operation instruction to the movement part by the worker. Thus, for example, the detachment work of detaching the spigot of the pipe from the socket of the joint-target pipe can be performed by the operation instruction to the movement part by the worker. Therefore, there is no need to remove the pipe grasping parts from the spigot of the pipe and perform the detachment work manually by the worker. As a result, it is possible to efficiently perform the joining work between the spigot of the pipe and the socket of the joint-target pipe.

In the twelfth configuration, in the manual operation switching step, only the control signal for the movement part generated by the operation instruction receiver is output to the movement part when the manual operation mode is entered (thirteenth configuration).

In the configuration described above, when the manual operation mode is entered, only the control signal input from the operation part by the worker is output to the movement part. Therefore, the pipe joining device does not perform the joining work between the spigot of the pipe and the socket of the joint-target pipe by a control signal other than the control signal input by the worker. As a result, it is possible to more reliably perform the joining work between the spigot of the pipe and the socket of the joint-target pipe.

In the eighth configuration, the method for joining pipes further includes a joining completion determining step of determining, by a joining completion determiner, completion of joining between the spigot of the pipe and the socket of the joint-target pipe, and an evaluating step of evaluating, by an evaluator, the joining condition between the spigot of the pipe and the socket of the joint-target pipe based on a history of the driving force of the movement part detected by the driving force detector during a period from start of joining between the spigot of the pipe and the socket of the joint-target pipe to completion of the joining. In the evaluating step, the joining condition between the spigot of the pipe and the socket of the joint-target pipe is evaluated when the joining between the spigot of the pipe and the socket of the joint-target pipe is determined to have been completed in the joining completion determining step (fourteenth configuration).

In the configuration described above, the evaluator evaluates the joining condition between the spigot of the pipe and the socket of the joint-target pipe based on a history of the driving force of the movement part detected by the driving force detector during a period from start of joining between the spigot of the pipe and the socket of the joint-target pipe to completion of the joining. That is, the evaluator comprehensively evaluates the joining condition inside the socket of the joint-target pipe based on the history of the driving force of the movement part after completion of joining between the spigot of the pipe and the socket of the joint-target pipe. Therefore, not only can a determination based on the joining condition during the joining work be performed, but the joined state between the spigot of the pipe and the socket of the joint-target pipe can also be evaluated. As a result, it is possible to efficiently perform the joining work between the spigot of the pipe and the socket of the joint-target pipe.

### ADVANTAGEOUS EFFECTS OF INVENTION

A pipe joining device according to one embodiment of the present disclosure includes a joint-target pipe attachment part to be attached to a socket side of a joint-target pipe, pipe grasping parts configured to grasp a spigot side of a pipe, a movement part configured to move at least one of the joint-target pipe attachment part and the pipe grasping parts in an axial direction so as to join the spigot of the pipe and the socket of the joint-target pipe to each other in the axial direction, a driving force detector configured to detect a driving force of the movement part during movement of at least one of the joint-target pipe attachment part and the pipe grasping parts in the axial direction, and a determiner configured to determine a joining condition between the spigot of the pipe and the socket of the joint-target pipe based on the driving force of the movement part detected by the driving force detector.

The pipe joining device having the above-described configuration is capable of determining, in real time during the joining work between the spigot of the pipe and the socket of the joint-target pipe, whether there is a joining abnormality between the spigot of the pipe and the socket of the joint-target pipe. As a result, it is possible to efficiently perform the joining work between the spigot of the pipe and the socket of the joint-target pipe.

### BRIEF DESCRIPTION OF DRAWINGS

[FIG. 1] FIG. 1 is a side view showing a schematic configuration of a pipe joining device according to an embodiment of the present disclosure.
[FIG. 2] FIG. 2 is a top view showing the schematic configuration of the pipe joining device.
[FIG. 3] FIG. 3 is a diagram of the pipe joining device viewed in an axial direction from a joint-target pipe side.
[FIG. 4] FIG. 4 is a functional block diagram showing a schematic configuration of a pipe moving mechanism in the pipe joining device.
[FIG. 5] FIG. 5 is a flowchart showing a method for joining pipes using the pipe joining device.
[FIG. 6] FIG. 6 is a diagram corresponding to FIG. 3 in a case where a pair of attachment members in a joint-target pipe attachment part is in an open state.
[FIG. 7] FIG. 7 shows how the pipe joining device is grasped by a grasping device attached to a tip end of an arm of a work machine and carried to the joint-target pipe in a trench.
[FIG. 8] FIG. 8 is a side view showing a state in which the joint-target pipe attachment part of the pipe joining device is attached to the joint-target pipe.
[FIG. 9] FIG. 9 is a diagram corresponding to FIG. 3 in a case where the pair of attachment members in the joint-target pipe attachment part is brought into a closed state by an attachment member driving part.
[FIG. 10] FIG. 10 is a side view showing a state where a pipe is supported by a plurality of supports at a predetermined height and aligned with the joint-target pipe.
[FIG. 11] FIG. 11 is a top view showing a state where a pair of pipe grasping parts is grasping an outer circumferential surface of the pipe on a spigot side.
[FIG. 12] FIG. 12 is a top view showing how axial movement parts move to thereby draw the spigot of the pipe closer to a socket of the joint-target pipe via the pair of pipe grasping parts.
[FIG. 13] FIG. 13 is a side view showing how the pipe joining device is lifted by a work machine or the like to be separated from the pipe and the joint-target pipe.
[FIG. 14] FIG. 14 is a flowchart illustrating joining condition determination processing of the flowchart shown in FIG. 5.
[FIG. 15] FIG. 15 is a functional block diagram showing a schematic configuration of a pipe moving mechanism of a pipe joining device according to a second embodiment.
[FIG. 16] FIG. 16 is a flowchart illustrating joining condition determination processing of a determiner.
[FIG. 17] FIG. 17 is a graph showing an allowable range of driving force, which is defined for each position of the pipe.
[FIG. 18] FIG. 18 is a functional block diagram showing a schematic configuration of a pipe moving mechanism of a pipe joining device according to a third embodiment.
[FIG. 19] FIG. 19 is a functional block diagram showing a schematic configuration of a pipe moving mechanism of a pipe joining device according to a fourth embodiment.

### DESCRIPTION OF EMBODIMENTS

Embodiments of the present disclosure are described below with reference to the drawings. In each of the drawings, the same parts/portions are denoted by the same reference numerals, and the description thereof will not be repeated. Note that the dimensions of the constituent members in each drawing do not faithfully represent the actual dimensions of the constituent members or the dimensional ratios and the like among them.

In the following description, an axial direction means a direction in which an axis L2 of a joint-target pipe W2 extends. A left-right direction means a horizontal direction and a direction orthogonal to the axial direction. The horizontal direction includes not only the horizontal direction in the strict sense, but also a direction intersecting with an up-down direction.

Furthermore, in the following description, expressions such as "secure," "connect," and "attach" (hereinafter, referred to as securing and the like) include not only cases in which the members are subjected to direct securing and the like to each other but also cases in which the members are subjected to securing and the like via another member. That is, in the following description, the expressions such as securing and the like include both direct securing and the like and indirect securing and the like between members.

### [First Embodiment]

### (Pipe Joining Device)

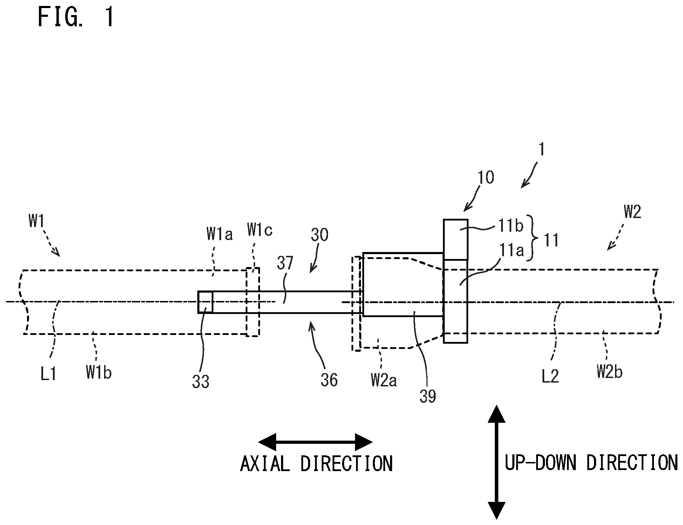

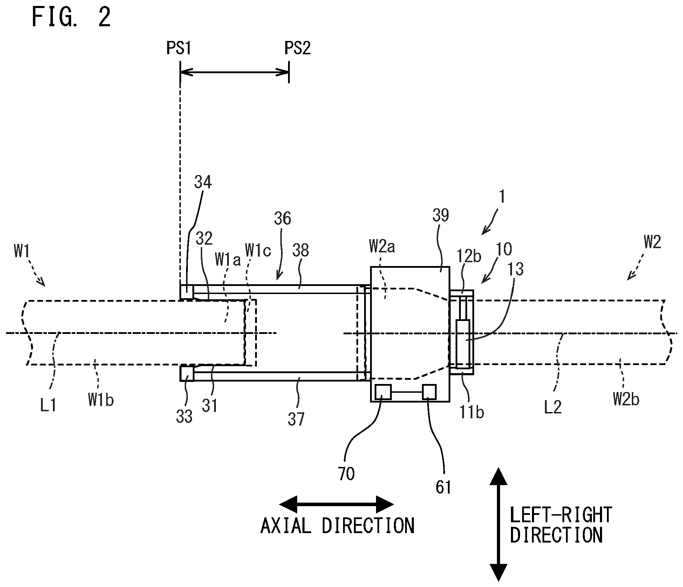

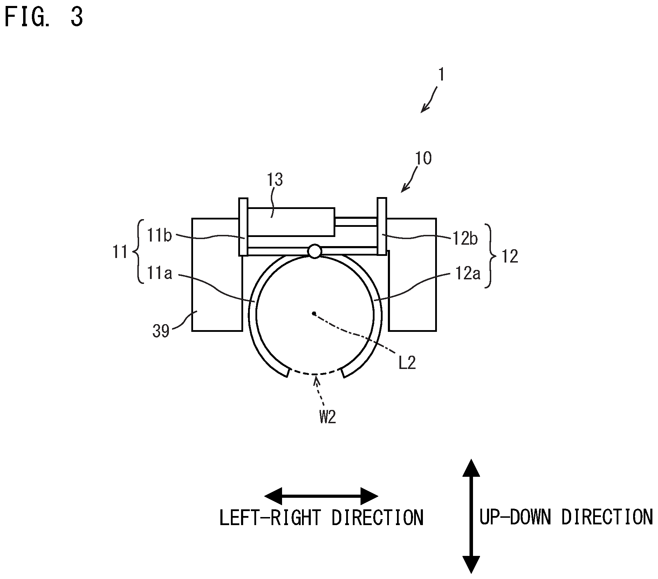

FIG. 1 is a side view showing a schematic configuration of a pipe joining device 1 according to an embodiment of the present disclosure. FIG. 2 is a top view showing the schematic configuration of the pipe joining device 1. FIG. 3 is a diagram of the pipe joining device 1 viewed in the axial direction from the joint-target pipe W2 side.

The pipe joining device 1 is a device for inserting a spigot W1a of a pipe W1 into a socket W2a of the joint-target pipe W2 for joining them. The pipe joining device 1 is used in a trench where the pipe W1 and the joint-target pipe W2 are laid. The pipe joining device 1 is installed in the trench by a work machine, for example. The pipe joining device 1 has a size that allows installation in the trench.

The pipe W1 and the joint-target pipe W2 are water pipes, for example. The pipe W1 and the joint-target pipe W2 may be pipes other than the water pipes, such as sewage pipes, agricultural water pipes, and gas pipes. The pipe W1 and the joint-target pipe W2 may be ductile cast-iron pipes, other metal pipes, or resin pipes.

With an axis L1 of the spigot W1a of the pipe W1 being positionally adjusted relative to the axis L2 of the socket W2a of the joint-target pipe W2, the pipe joining device 1 brings the spigot W1a of the pipe W1 closer to the socket W2a of the joint-target pipe W2 to be inserted therein. For details, as shown in FIG. 1, the pipe joining device 1 includes a joint-target pipe attachment part 10 and a pipe moving mechanism 30.

The joint-target pipe attachment part 10 is attached to the socket W2a side of the joint-target pipe W2. Specifically, the joint-target pipe attachment part 10 is attached to the socket W2a side in a straight pipe portion W2b of the joint-target pipe W2. As a result, when a movement part 36 draws the spigot W1a of the pipe W1 closer to the socket W2a of the joint-target pipe W2 as described later, the joint-target pipe attachment part 10 contacts the socket W2a of the joint-target pipe W2 and a reaction force generated during such drawing can be received by the socket W2a of the joint-target pipe W2.

As shown in FIG. 3, the joint-target pipe attachment part 10 includes a pair of attachment members 11 and 12 and an attachment member driving part 13. The pair of attachment members 11 and 12 sandwiches the straight pipe portion W2b of the joint-target pipe W2, to thereby be attached to the straight pipe portion W2b. The pair of attachment members 11 and 12 includes pipe attachment parts 11a and 12a and driving force input parts 11b and 12b.

Each of the pipe attachment parts 11a and 12a has, viewed in the axial direction, a shape of a semicircle along the outer circumferential surface of the straight pipe portion W2b of the joint-target pipe W2. The pipe attachment parts 11a and 12a are attached onto the outer circumferential surface of the straight pipe portion W2b of the joint-target pipe W2. The driving force input parts 11b and 12b are connected to the pipe attachment parts 11a and 12a so that the driving force input from the attachment member driving part 13 can switch the pipe attachment parts 11a and 12a between a closed state of sandwiching the straight pipe portion W2b of the joint-target pipe W2 and an open state of being away from the straight pipe portion W2b of the joint-target pipe W2. In the present embodiment, the driving force input parts 11b and 12b are connected to upper ends of the pipe attachment parts 11a and 12a. The pair of attachment members 11 and 12 is connected, for example, by a rotary shaft at a portion connecting the pipe attachment parts 11a and 12a and the driving force input parts 11b and 12b, so as to be rotatable about an axis extending in the axial direction.

The attachment member driving part 13 is provided between the driving force input parts 11b and 12b so that the driving force can be transmitted to the driving force input parts 11b and 12b. The attachment member driving part 13 provides, to the driving force input parts 11b and 12b, such a driving force that switches the pipe attachment parts 11a and 12a between the open state and the closed state described above. In the present embodiment, the attachment member driving part 13 extends and retracts to change the distance between the driving force input parts 11b and 12b, to thereby switch the pipe attachment parts 11a and 12a between the open state and the closed state. The attachment member driving part 13 is a hydraulic cylinder, for example.

With the above configuration, the pair of attachment members 11 and 12 can be switched between the closed state and the open state by the driving force generated by the attachment member driving part 13, the closed state being a state in which the pipe attachment parts 11a and 12a sandwich the straight pipe portion W2b of the joint-target pipe W2, the open state being a state in which the pipe attachment parts 11a and 12a are away from the straight pipe portion W2b of the joint-target pipe W2. With the joint-target pipe attachment part 10 being attached to the straight pipe portion W2b of the joint-target pipe W2, the pair of attachment members 11 and 12 sandwiches the straight pipe portion W2b.

The pipe moving mechanism 30 grasps the spigot W1a side of the pipe W1 and moves the spigot W1a toward the socket W2a of the joint-target pipe W2, to thereby insert the spigot W1a into the socket W2a. The pipe moving mechanism 30 includes a pair of pipe grasping parts 31 and 32, the movement part 36, a driving force detector 61, and a controller 70.

The pair of pipe grasping parts 31 and 32 sandwiches and grasps the spigot W1a side of the pipe W1. The pair of pipe grasping parts 31 and 32 is attached to the tip end portions of a pair of axial movement parts 37 and 38 in the movement part 36 described later via connectors 33 and 34, and is configured to be engageable with a spigot protrusion W1c located at the axial tip end of the spigot W1a of the pipe W1. Each of the pair of pipe grasping parts 31 and 32 is a plate member having, viewed in the axial direction, a shape of an arc along the outer circumferential surface of the spigot W1a side of the pipe W1. The pair of plate-like pipe grasping parts 31 and 32 is attached so as to extend from the tip end portions of the pair of axial movement parts 37 and 38 toward the base end sides thereof.

The thickness of each of the pair of pipe grasping parts 31 and 32 is equal to or smaller than the radial protrusion height of the spigot protrusion W1c. As described later, this prevents the pair of pipe grasping parts 31 and 32 from interfering with the socket W2a when the spigot W1a is inserted into the socket W2a of the joint-target pipe W2 with the spigot W1a side of the pipe W1 being grasped by the pair of pipe grasping parts 31 and 32.

The connectors 33 and 34 connect the tip ends of the pair of axial movement parts 37 and 38 and the pair of pipe grasping parts 31 and 32 to each other so as to allow rotation about axes extending in the up-down direction. That is, the connectors 33 and 34 are connected to the tip ends of the pair of axial movement parts 37 and 38 so as to be rotatable about the above-described axes. Furthermore, the connectors 33 and 34 are also connected to the pair of pipe grasping parts 31 and 32. In a top view, the gap between the connectors 33 and 34 in the left-right direction is equal to the outer diameter of the pipe W1 on the spigot W1a side in a parallel state and smaller than the outer diameter of the pipe W1 on the spigot W1a side in a state where the connectors 33 and 34 are rotated about the above-described axes relative to the tip ends of the pair of axial movement parts 37 and 38. The pair of pipe grasping parts 31 and 32 is elastically supported against the connectors 33 and 34 or the pair of axial movement parts 37 and 38 by elastic members (not shown) so as to be displaced in a direction approaching each other.

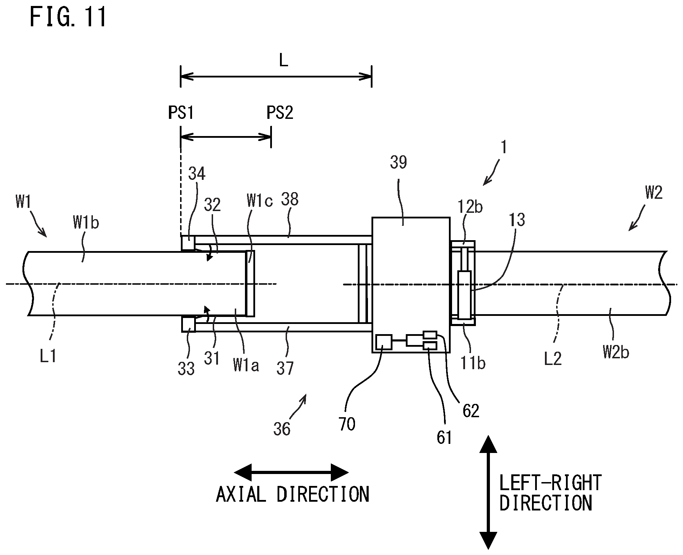

Therefore, when the spigot W1a side of the pipe W1 is inserted between the connectors 33 and 34, the outer circumferential surface of the pipe W1 on the spigot W1a side contacts the connectors 33 and 34. As a result, the connectors 33 and 34 and the pair of pipe grasping parts 31 and 32 rotate about the above-described axes to move the pair of pipe grasping parts 31 and 32 toward the outer circumferential surface of the pipe W1 on the spigot W1a side (see the solid arrows in FIG. 11). Moreover, at this time, the elastic members described above bias the pair of pipe grasping parts 31 and 32 toward the outer circumferential surface of the pipe W1 on the spigot W1a side. As a result, the pair of pipe grasping parts 31 and 32 comes into close contact with the outer circumferential surface of the pipe W1 on the spigot W1a side.

Note that the pair of pipe grasping parts 31 and 32 may be configured to generate an elastic restoring force toward the outer circumferential surface of the pipe W1 on the spigot W1a side.

As shown in FIGS. 1 and 2, the movement part 36 moves the pair of pipe grasping parts 31 and 32 grasping the spigot W1a side of the pipe W1 in the axial direction toward the socket W2a of the joint-target pipe W2, based on a control signal output from the controller 70. In detail, the movement part 36 includes the pair of axial movement parts 37 and 38 and a movement support 39.

The pair of axial movement parts 37 and 38 is configured so that each of the tip ends thereof can move in the axial direction relative to the movement support 39. Each of the pair of axial movement parts 37 and 38 may be, for example, a hydraulic cylinder that extends and retracts in the axial direction, or a mechanism that can move in the axial direction, such as a rack and pinion. The base end sides of the pair of axial movement parts 37 and 38 are supported by the movement support 39.

The movement support 39 is connected to the joint-target pipe attachment part 10. The movement support 39 may be connected, for example, to a rotary shaft connecting the pair of attachment members 11 and 12 so as to allow rotation thereof or to the attachment member driving part 13 in the joint-target pipe attachment part 10.

The driving force detector 61 detects a driving force of the movement part 36 when the axial movement part 37 moves the pipe grasping part 31 in the axial direction. The driving force detector 61 includes a sensor such as a pressure sensor or a torque sensor that is capable of detecting the driving force of the movement part 36. Specifically, the driving force detector 61 detects the driving force when the axial movement part 37 moves in the axial direction together with the pipe grasping part 31. The driving force detector 61 outputs the detected driving force to a determiner 63 of the controller 70.

The controller 70 generates and outputs a control signal for the movement part 36. The details of the controller 70 will be described below.

### (Configuration of Controller)

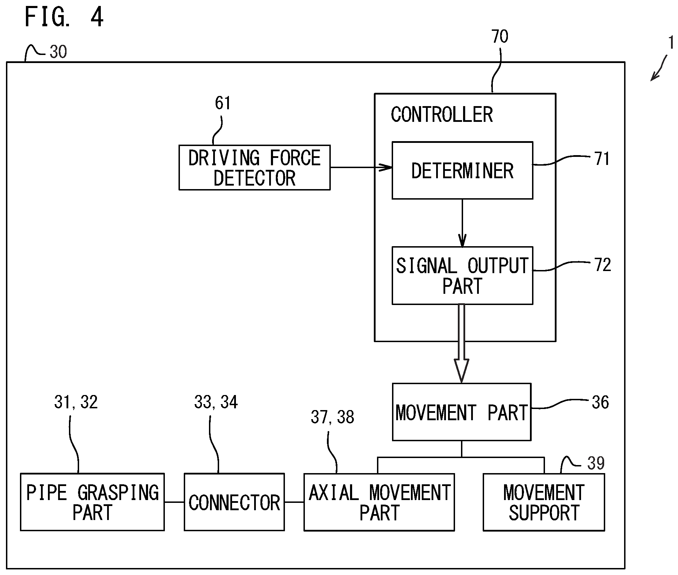

FIG. 4 is a functional block diagram showing a schematic configuration of the pipe moving mechanism 30 in the pipe joining device 1. As shown in FIG. 4, the controller 70 includes the determiner 71 and a signal output part 72.

The determiner 71 determines a joining condition between the spigot W1a of the pipe W1 and the socket W2a of the joint-target pipe W2 based on a driving force of the movement part 36 detected by the driving force detector 61. For example, the determiner 71 determines that the joining condition between the spigot W1a of the pipe W1 and the socket W2a of the joint-target pipe W2 is abnormal when the driving force detected by the driving force detector 61 does not fall within a predetermined allowable range.

The determiner 71 may determine that the joining condition is abnormal when the driving force detected by the driving force detector 61 is greater than or equal to an upper limit of the predetermined allowable range. In this case, there is a possibility that the spigot W1a of the pipe W1 cannot be smoothly inserted into the socket W2a of the joint-target pipe W2. In this case, there is also a possibility of improper attachment of a rubber seal.

The determiner 71 may determine that the joining condition is abnormal when the driving force detected by the driving force detector 61 is less than or equal to a lower limit of the predetermined allowable range. In this case, there is a possibility that the resistance during insertion of the pipe W1 is too small. Therefore, in this case, there is a possibility that the rubber seal has not been installed or the like.

The signal output part 72 generates and outputs a control signal for controlling the movement part 36. The signal output part 72 generates a control signal for moving the pair of pipe grasping parts 31 and 32 in the axial direction by the axial movement parts 37 and 38 and outputs the control signal to the movement part 36. The signal output part 72 also generates a control signal for stopping movement of the pipe grasping parts 31 and 32 and outputs the control signal to the movement part 36 when the determiner 71 determines that the joining condition between the spigot W1a of the pipe W1 and the socket W2a of the joint-target pipe W2 is abnormal.

### (Pipe Joining Method)

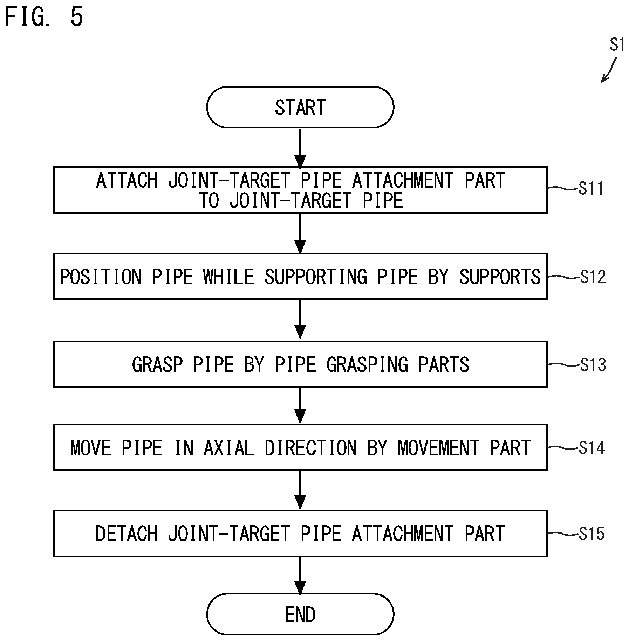

Next, a pipe joining method S1 for joining the spigot W1a of the pipe W1 and the socket W2a of the joint-target pipe W2 using the pipe joining device 1 having the above-described configuration will be described. FIG. 5 is a flowchart showing the pipe joining method S1 using the pipe joining device 1.

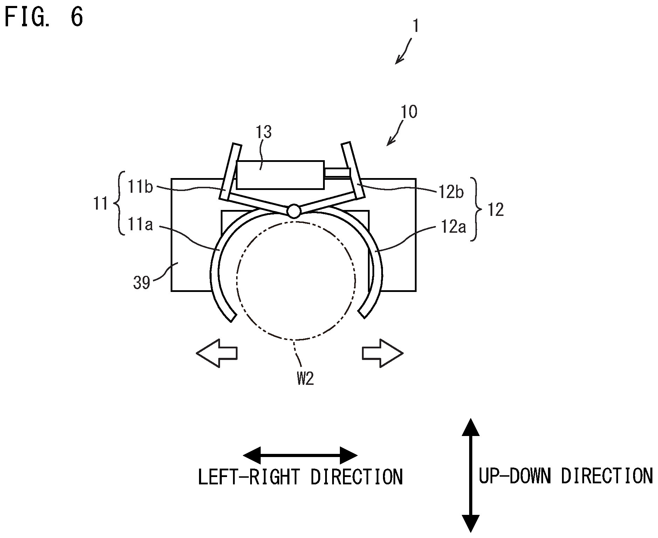

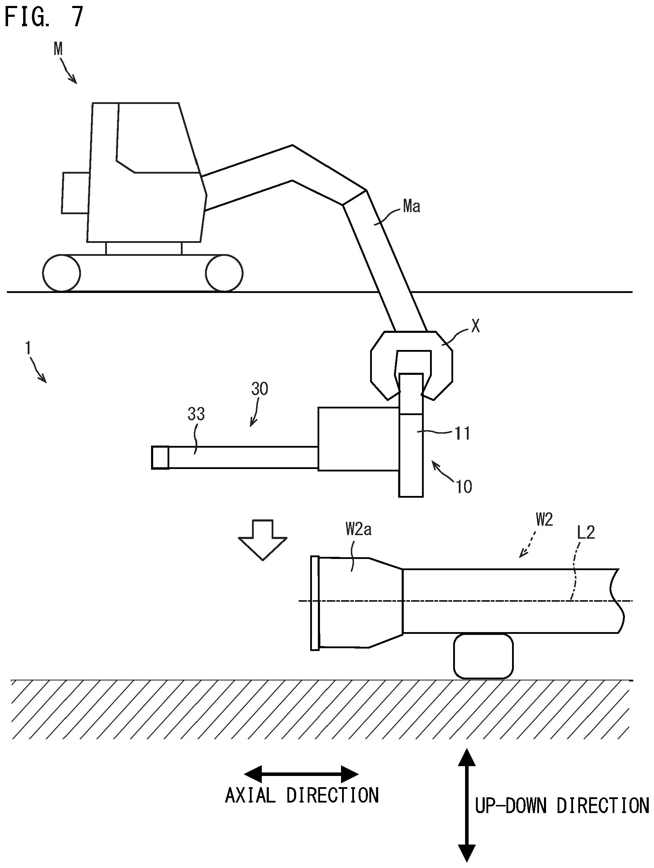

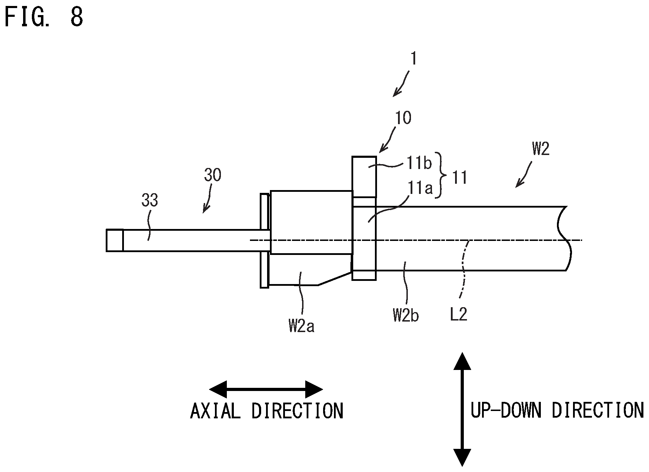

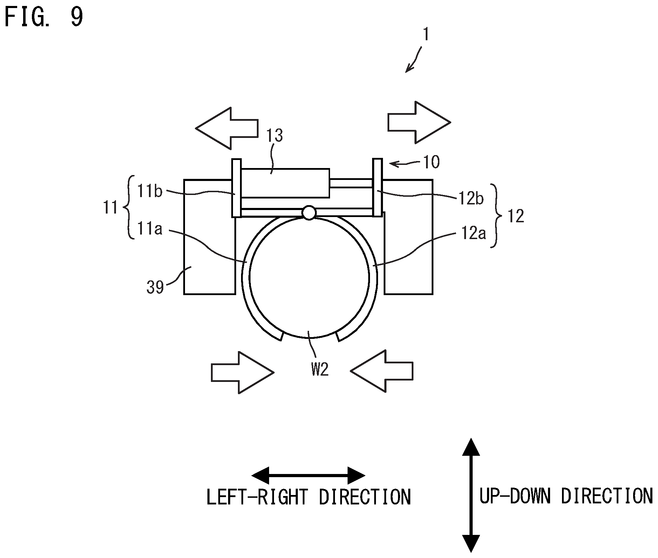

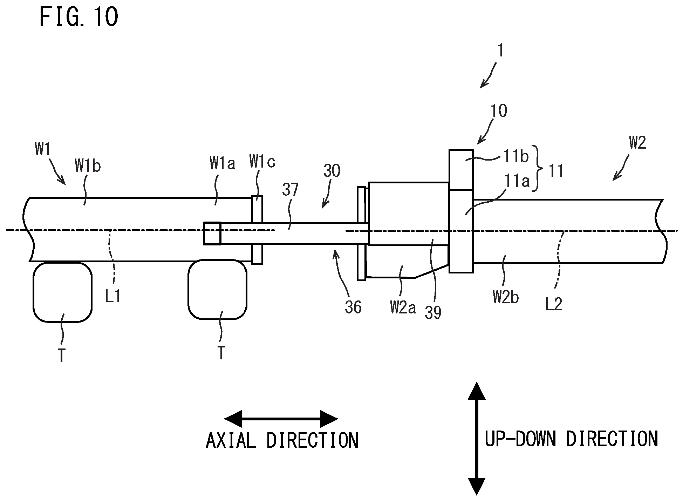

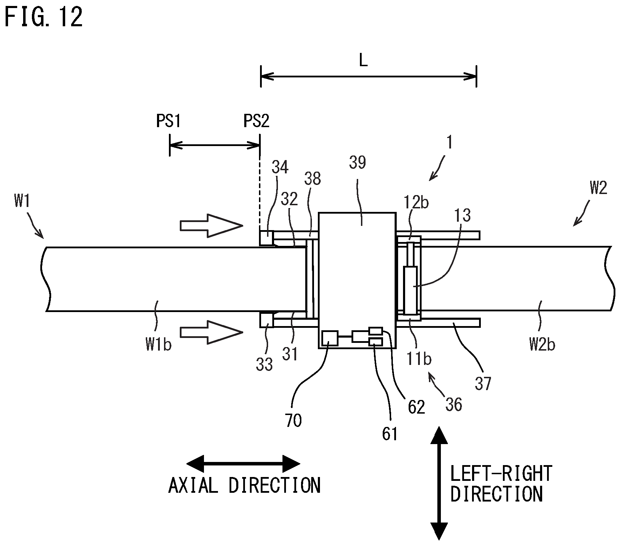

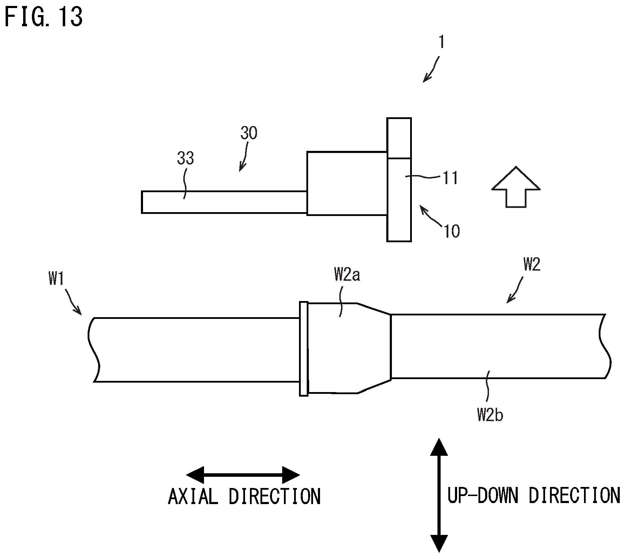

FIGS. 6 to 13 are diagrams schematically illustrating the pipe joining method S1 using the pipe joining device 1. In detail, FIG. 6 is a diagram corresponding to FIG. 3 in a case where the pair of attachment members 11 and 12 in the joint-target pipe attachment part is in the open state. FIG. 7 shows how the pipe joining device 1 is grasped by a grasping device X attached to the tip end of an arm Ma of a work machine M and carried to the joint-target pipe W2 in the trench. FIG. 8 is a side view showing a state where the joint-target pipe attachment part 10 of the pipe joining device 1 is attached to the joint-target pipe W2. FIG. 9 is a diagram corresponding to FIG. 3 in a case where the pair of attachment members 11 and 12 in the joint-target pipe attachment part 10 is brought into the closed state by the attachment member driving part 13. FIG. 10 is a side view showing a state where the pipe W1 is supported by a plurality of supports T at a predetermined height and aligned with the joint-target pipe W2. FIG. 11 is a top view showing a state where the pair of pipe grasping parts 31 and 32 is grasping the outer circumferential surface of the pipe W1 on the spigot W1a side. FIG. 12 is a top view showing how the axial movement parts 37 and 38 move to draw the spigot W1a of the pipe W1 closer to the socket W2a of the joint-target pipe W2 via the pair of pipe grasping parts 31 and 32. FIG. 13 is a side view showing how the pipe joining device 1 is lifted by a work machine or the like to be separated from the pipe W1 and the joint-target pipe W2.

In step S11 of the flowchart shown in FIG. 5, the joint-target pipe attachment part 10 of the pipe joining device 1 is attached to the joint-target pipe W2.

Specifically, as shown in FIG. 6, the pair of attachment members 11 and 12 of the joint-target pipe attachment part 10 in the pipe joining device 1 is in the open state. In that state, as shown in FIG. 7, the pipe joining device 1 is carried by the work machine M into the trench where the pipe W1 is to be laid. The grasping device X is attached to the tip end of the arm Ma of the work machine M. The pipe joining device 1 is grasped by the grasping device X attached to the tip end of the arm Ma of the work machine M and carried into the trench. At this time, as shown in FIG. 8, the pipe joining device 1 is disposed relative to the joint-target pipe W2 so that the joint-target pipe attachment part 10 is positioned on the socket W2a side of the straight pipe portion W2b of the joint-target pipe W2.

Note that the work machine M can perform various types of construction, work, and the like, by replacing the attachment connected to the tip end of the arm Ma. In the present embodiment, the work machine M is, for example, a mini backhoe that is a construction machine for excavation. Note that the work machine M may be a construction machine other than a mini backhoe, such as a truck crane, for example.

Next, as shown in FIG. 9, the pair of attachment members 11 and 12 in the joint-target pipe attachment part 10 is brought into the closed state by the attachment member driving part 13. In the present embodiment, the attachment member driving part 13 extends to drive the pair of attachment members 11 and 12 so that the pipe attachment parts 11a and 12a of the pair of attachment members 11 and 12 contact the outer circumferential surface of the straight pipe portion W2b of the joint-target pipe W2. As a result, the joint-target pipe attachment part 10 can be attached to the socket W2a side of the joint-target pipe W2.

Next, in step S12 of the flowchart shown in FIG. 5, the pipe W1 is positioned relative to the joint-target pipe W2 while being held at a predetermined height by the supports T.

Specifically, as shown in FIG. 10, with the joint-target pipe attachment part 10 being attached to the socket W2a side of the joint-target pipe W2, the pipe W1 held at a predetermined height by the plurality of supports T is positioned relative to the joint-target pipe W2. Note that the plurality of supports T supports the pipe W1 at a plurality of points in the axial direction. The supports T are configured so that the support height thereof can be changed. The supports T are constituted by, for example, a bag that can change the support height described above depending on the amount of fluid to be put inside. As a result, the axis L1 of the spigot W1a of the pipe W1 is positionally adjusted relative to the axis L2 of the socket W2a of the joint-target pipe W2.

Next, in step S13 of the flowchart shown in FIG. 5, the spigot W1a side of the pipe W1 is grasped by the pair of pipe grasping parts 31 and 32.

Specifically, with the pipe W1 positioned relative to the joint-target pipe W2, the pair of pipe grasping parts 31 and 32 rotates, as shown in FIG. 11, about rotation axes extending in the up-down direction at the connectors 33 and 34 to contact the outer circumferential surface of the pipe W1 on the spigot W1a side. As a result, the spigot W1a side of the pipe W1 is grasped by the pair of pipe grasping parts 31 and 32. Note that the pair of pipe grasping parts 31 and 32 is pressed against the outer circumferential surface of the pipe W1 on the spigot W1a side by spring members (not shown). In addition, a rubber seal is attached on the inner circumferential surface of the socket W2a. In order to facilitate insertion of the pipe W1, a lubricant may be applied to the inner circumferential surface of the rubber seal.

With the spigot W1a side of the pipe W1 grasped by the pair of pipe grasping parts 31 and 32, the pipe W1 is located at a movement start position PS1 that is an axial distance L from one end of the movement support 39, the distance L corresponding to the combined axial length of the pair of axial movement parts 37 and 38 and the connectors 33 and 34. The movement start position PS1 is based on the tip end portions of the pair of axial movement parts 37 and 38 for convenience of explanation, but is not limited thereto. The movement start position PS1 may be based on the end face of the spigot W1a of the pipe W1.

Next, in step S14 of the flowchart shown in FIG. 5, the pair of pipe grasping parts 31 and 32 is moved in the axial direction by the movement part 36 to make the spigot W1a of the pipe W1 closer to the socket W2a of the joint-target pipe W2 to be inserted therein.

Specifically, as shown in FIG. 12, the pair of axial movement parts 37 and 38 in the movement part 36 is moved in the axial direction. At this time, the tip ends of the pair of pipe grasping parts 31 and 32 connected to the end portions of the pair of axial movement parts 37 and 38 contact the spigot protrusion W1c of the spigot W1a of the pipe W1. Therefore, the axial movement parts 37 and 38 move in the axial direction as described above to thereby cause the spigot W1a of the pipe W1 to be drawn closer to the socket W2a of the joint-target pipe W2 via the pair of pipe grasping parts 31 and 32. The pair of pipe grasping parts 31 and 32 is inserted into the socket W2a together with the spigot W1a when the spigot W1a of the pipe W1 is inserted into the socket W2a of the joint-target pipe W2. Note that in step S14, the determiner 71 determines the joining condition between the spigot W1a of the pipe W1 and the socket W2a of the joint-target pipe W2 based on a position of the pipe W1 and a driving force of the movement part 36. The details of joining condition determination processing by the determiner 71 will be described later. With no abnormality in the joining condition, the pipe W1 is moved in the axial direction, so that the spigot W1a of the pipe W1 is inserted into the socket W2a of the joint-target pipe W2 up to a predetermined movement completion position PS2. Thus, insertion of the pipe W1 into the joint-target pipe W2 is completed.

Finally, in step S15 of the flowchart shown in FIG. 5, the pair of attachment members 11 and 12 in the joint-target pipe attachment part 10 is brought into the open state, and the pipe joining device 1 is detached from the joint-target pipe W2.

Specifically, after the spigot W1a of the pipe W1 is inserted into the socket W2a of the joint-target pipe W2, the pair of attachment members 11 and 12 of the joint-target pipe attachment part 10 is brought into the open state. Then, as shown in FIG. 13, the pipe joining device 1 is lifted by a work machine or the like to be separated from the joined pipe W1 and joint-target pipe W2.

Thereafter, the flow shown in FIG. 5 ends (END).

### (Joining Condition Determination Processing)

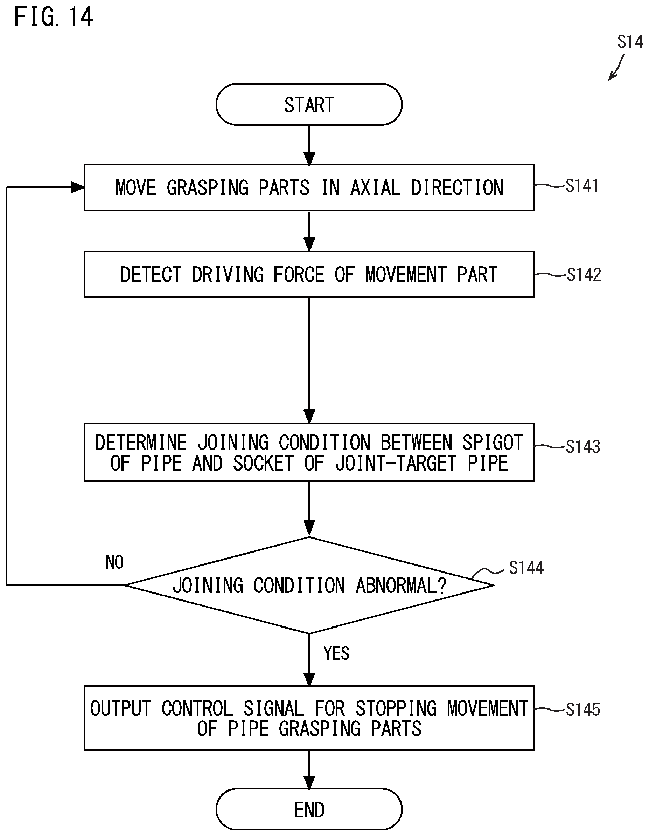

FIG. 14 is a flowchart illustrating the joining condition determination processing in step S14 of the flowchart shown in FIG. 5.

As shown in FIG. 14, when the joining condition determination processing is started (START), in movement step S141, the pair of pipe grasping parts 31 and 32 is moved in the axial direction by the movement part 36 so as to join the spigot W1a of the pipe W1 and the socket W2a of the joint-target pipe W2 in the axial direction.

Next, in driving force detecting step S142, the driving force detector 61 detects a driving force of the movement part 36 when the pair of pipe grasping parts 31 and 32 is moved in the axial direction.

Next, in determining step S143, the determiner 71 determines the joining condition between the spigot W1a of the pipe W1 and the socket W2a of the joint-target pipe W2 based on the driving force of the movement part 36 detected by the driving force detector 61 and a position of the pipe W1 detected by a pipe position detector 62. When the joining condition is normal (NO in step S144), the flow returns to movement step S141 and the pair of pipe grasping parts 31 and 32 is further moved in the axial direction by the movement part 36.

On the other hand, when the joining condition is abnormal (YES in step S144), the flow proceeds to signal output step S145. In signal output step S145, the signal output part 72 transmits, to the movement part 36, a control signal for stopping movement of the pair of pipe grasping parts 31 and 32. As a result, movement of the pair of pipe grasping parts 31 and 32 is stopped.

Thereafter, the flow shown in FIG. 14 ends (END).

In the pipe joining device 1 and the pipe joining method S1 described above, when joining the spigot W1a of the pipe W1 and the socket W2a of the joint-target pipe W2, the determiner 71 determines the joining condition between the spigot W1a of the pipe W1 and the socket W2a of the joint-target pipe W2 based on the driving force of the movement part 36 detected by the driving force detector 61. That is, the determiner 71 indirectly determines, by the driving force, the joining condition inside the socket W2a of the joint-target pipe W2 that cannot be visually confirmed during the joining work. Therefore, it is possible to determine, in real time during the joining work between the spigot W1a of the pipe W1 and the socket W2a of the joint-target pipe W2, whether there is a joining abnormality between the spigot W1a of the pipe W1 and the socket W2a of the joint-target pipe W2. As a result, it is possible to efficiently perform the joining work between the spigot W1a of the pipe W1 and the socket W2a of the joint-target pipe W2.

Furthermore, with the above-described configuration, when the joining condition between the spigot W1a of the pipe W1 and the socket W2a of the joint-target pipe W2 is abnormal, the joining work between the spigot W1a of the pipe W1 and the socket W2a of the joint-target pipe W2 by the movement part 36 is suspended. Therefore, it is possible to easily detach the spigot W1a of the pipe W1 from the socket W2a of the joint-target pipe W2 and perform the joining work again. As a result, it is possible to efficiently perform the joining work between the spigot W1a of the pipe W1 and the socket W2a of the joint-target pipe W2.

### [Second Embodiment]

### (Schematic Configuration)

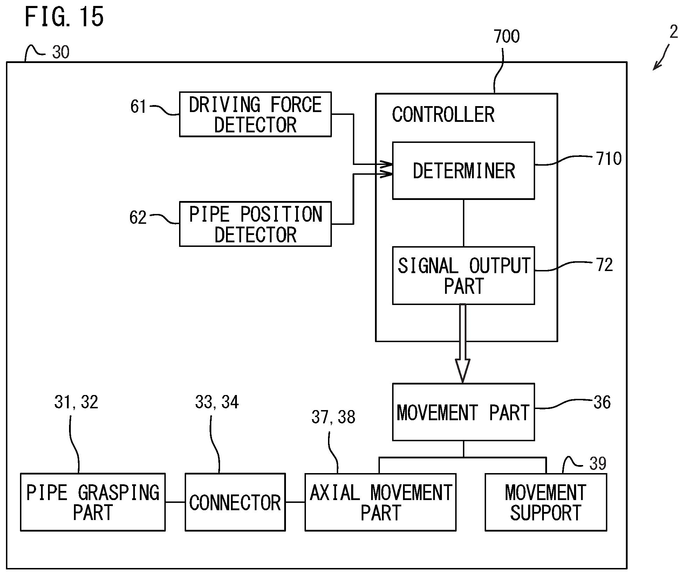

FIG. 15 is a functional block diagram showing a schematic configuration of the pipe moving mechanism 30 of a pipe joining device 2 according to a second embodiment. The pipe joining device 2 according to the second embodiment differs from the pipe joining device 1 according to the first embodiment in that the pipe joining device 2 includes a pipe position detector 62. In the following description, the same reference numerals are assigned to the same components as in the first embodiment, and the description thereof is omitted. Only the parts that differ from the first embodiment will be described.

As shown in FIG. 15, the pipe moving mechanism 30 of the pipe joining device 2 includes the pair of pipe grasping parts 31 and 32, the movement part 36, and the driving force detector 61. Since the pair of pipe grasping parts 31 and 32, the movement part 36, and the driving force detector 61 are the same as those in the first embodiment, the description thereof is not repeated here. The pipe moving mechanism 30 includes the pipe position detector 62 and a controller 700.

The pipe position detector 62 detects a movement amount of the axial movement part 37. The pipe position detector 62 can be constituted by, for example, a sensor capable of detecting the axial position of the spigot W1a of the pipe W1 inserted into the socket W2a of the joint-target pipe W2. The pipe position detector 62 outputs the detected position of the pipe W1 to a determiner 710 of the controller 700.

The controller 700 includes the determiner 710 and the signal output part 72. The determiner 710 determines a joining condition between the spigot W1a of the pipe W1 and the socket W2a of the joint-target pipe W2 based on the driving force of the movement part 36 detected by the driving force detector 61 and the position of the pipe W1 detected by the pipe position detector 62.

### (Joining Condition Determination Processing)

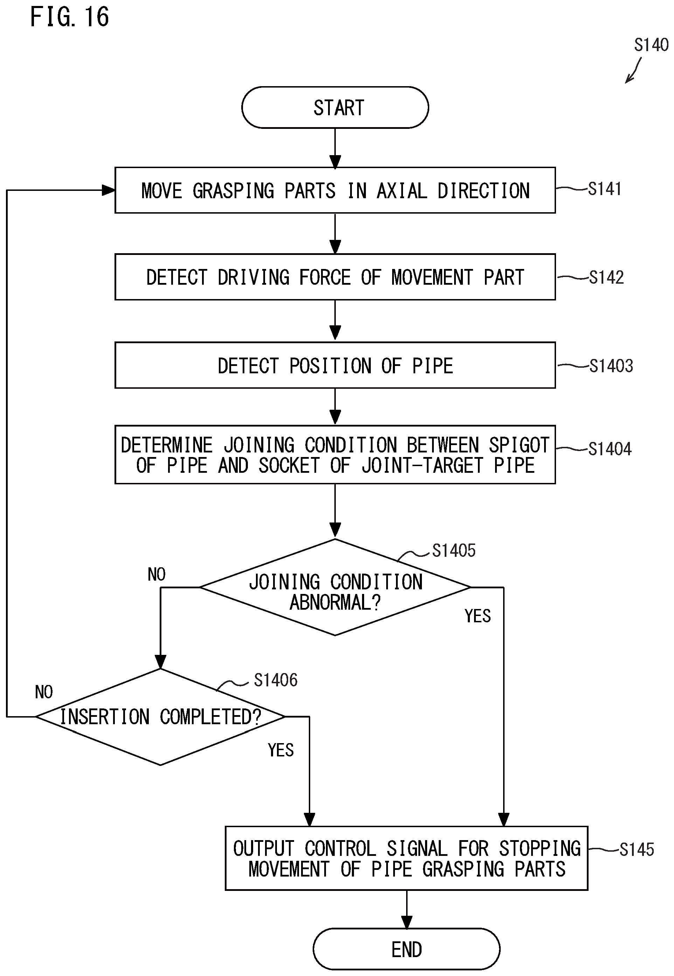

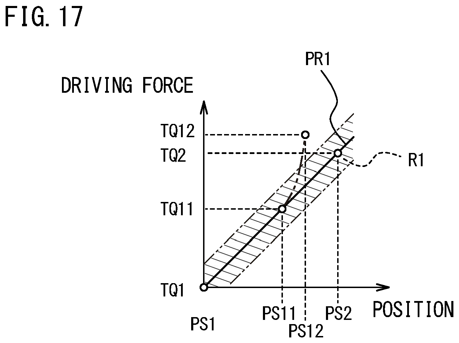

FIG. 16 is a flowchart illustrating joining condition determination processing of the determiner 710. FIG. 17 is a graph showing an allowable range R1 of the driving force, which is defined for each position of the pipe.

First, movement step S141 and driving force detecting step S142 after joining condition determination processing S140 has been started (START) are the same as movement step S141 and driving force detecting step S142 in the first embodiment, and the description thereof is not repeated here.

Next, in pipe position detecting step S1403, the pipe position detector 62 detects a position of the pipe W1 relative to the joint-target pipe W2.

Next, in determining step S1404, the determiner 710 determines a joining condition between the spigot W1a of the pipe W1 and the socket W2a of the joint-target pipe W2 based on a driving force of the movement part 36 detected by the driving force detector 61 and the position of the pipe W1 detected by the pipe position detector 62.

Specifically, the determiner 710 determines whether the driving force detected by the driving force detector 61 at the position of the pipe W1 detected by the pipe position detector 62 falls within the allowable range R1 of the driving force shown by hatching in FIG. 17. When the driving force is greater than or equal to an upper limit of the allowable range R1 or less than or equal to a lower limit of the allowable range R1 at a certain position, the determiner 710 determines that the joining condition is abnormal. For example, the open circles in FIG. 17 show an example in which the positions of the pipe W1 detected by the pipe position detector 62 and the driving forces detected by the driving force detector 61 during the joining work are plotted.

At the movement start position PS1, a driving force TQ1 is within the allowable range R1. At a position PS11 midway from the movement start position PS1 to the movement completion position PS2, a driving force TQ11 is also within the allowable range R1. When the pipe W1 moves from position PS11 to the movement completion position PS2 without the driving force detected by the driving force detector 61 falling outside the allowable range R1, insertion of the pipe W1 into the joint-target pipe W2 is completed. A driving force TQ2 at the movement completion position PS2 is within the allowable range R1. On the other hand, when a driving force TQ12 exceeding the upper limit of the allowable range R1 is detected at a position PS12, the determiner 710 determines that the joining condition is abnormal.

Note that the allowable range R1 can be determined based on, for example, data obtained by sampling the positions of the pipe W1 and the driving forces at the positions in past joining work. The allowable range R1 may be determined by providing a predetermined buffer range relative to a profile curve PR1 calculated based on the sampled data. The profile curve PR1 may be calculated by regression analysis using an arithmetic mean, a minimum value, a maximum value, a median value, the least-squares method, or the like. Furthermore, the determiner 710 may be constituted by a trained model that is obtained as a result of machine learning based on training data in which the sampled data of the positions of the pipe W1 and the driving forces at the positions are labeled with the type of normal state or abnormal state.

When the joining condition is abnormal (YES in step S1405), the flow proceeds to signal output step S145 and movement of the pair of pipe grasping parts 31 and 32 is stopped.

On the other hand, when the joining condition is normal (NO in step S1405), in completion determination step S1406, the determiner 710 determines whether the pair of pipe grasping parts 31 and 32 has moved to the movement completion position PS2. When the pair of pipe grasping parts 31 and 32 has moved to the movement completion position PS2 (YES in completion determination step S1406), the flow proceeds to signal output step S145 and movement of the pair of pipe grasping parts 31 and 32 is stopped. On the other hand, when the pair of pipe grasping parts 31 and 32 has moved to the movement completion position PS2 (NO in completion determination step S1406), the flow returns to movement step S141 and the pair of pipe grasping parts 31 and 32 is further moved in the axial direction.

In the pipe joining device 2 and the pipe joining method including the joining condition determination processing S140 described above, when joining the spigot W1a of the pipe W1 and the socket W2a of the joint-target pipe W2, the joining condition between the spigot W1a of the pipe W1 and the socket W2a of the joint-target pipe W2 is determined by the driving force for each position of the pipe W1 relative to the joint-target pipe W2. That is, the controller determines the joining condition inside the socket W2a of the joint-target pipe W2 that cannot be visually confirmed during the joining work, by the driving force corresponding to the joining stage between the socket W2a of the joint-target pipe W2 and the spigot W1a of the pipe W1. Therefore, it is possible to accurately determine, in real time during the joining work between the spigot W1a of the pipe W1 and the socket W2a of the joint-target pipe W2, whether there is a joining abnormality between the spigot W1a of the pipe W1 and the socket W2a of the joint-target pipe W2. As a result, it is possible to efficiently perform the joining work between the spigot W1a of the pipe W1 and the socket W2a of the joint-target pipe W2.

### [Third Embodiment]

### (Schematic Configuration)

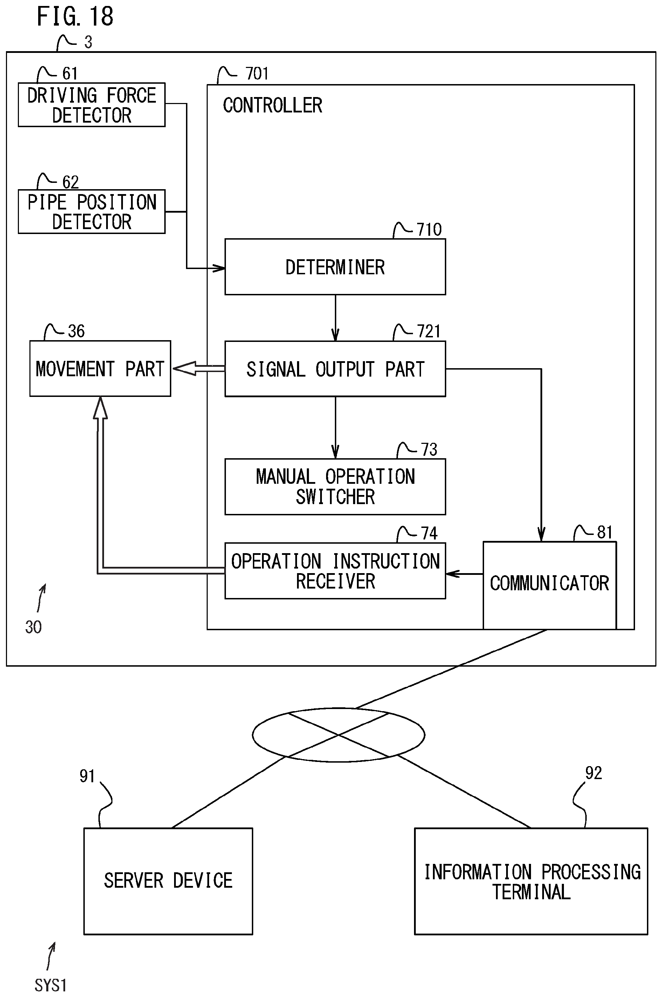

FIG. 18 is a functional block diagram showing a schematic configuration of the pipe moving mechanism 30 of a pipe joining device 3 according to a third embodiment. The pipe joining device 3 according to the third embodiment differs from the pipe joining device 2 according to the second embodiment in that the pipe joining device 3 includes a manual operation switcher 73 that switches an operation mode to a manual operation mode. In the following description, the same reference numerals are assigned to the same components as in the second embodiment, and the description thereof is omitted. Only the parts that differ from the second embodiment will be described.

As shown in FIG. 18, a pipe joining management system SYS1 includes the pipe joining device 3, an information processing terminal 92, and a server device 91. In the pipe joining management system SYS1, the pipe joining device 3, the information processing terminal 92, and the server device 91 are connected to each other so as to be capable of communicating via a communication network.

The information processing terminal 92 transmits, to the pipe joining device 3, an operation instruction for performing various operations on the movement part 36 of the pipe joining device 3. The information processing terminal 92 may be constituted by a remote controller dedicated to the pipe joining device 3. The information processing terminal 92 may be constituted by a mobile terminal such as a tablet terminal, a smartphone, or a laptop PC. The information processing terminal 92 may transmit the operation instruction to the pipe joining device 3 via the server device 91.

The server device 91 provides the information processing terminal 92 with various pieces of information relating to the pipe joining work.

The pipe moving mechanism 30 of the pipe joining device 3 includes the pair of pipe grasping parts 31 and 32 (not shown), the movement part 36, the driving force detector 61, and the pipe position detector 62. Since the pair of pipe grasping parts 31 and 32, the movement part 36, the driving force detector 61, and the pipe position detector 62 are as described above, the description thereof is not repeated here. As shown in FIG. 18, the pipe moving mechanism 30 includes a controller 701. The controller 701 includes a communicator 81, the determiner 710, a signal output part 721, the manual operation switcher 73, and an operation instruction receiver 74.

The communicator 81 is a communication interface for allowing the pipe joining device 3 to communicate with the server device 91 and the information processing terminal 92 via a communication network. For example, the pipe joining device 3 and the information processing terminal 92 may be connected so as to be capable of communicating via a wireless communication network. The information processing terminal 92 and the server device 91 may be connected so as to be capable of communicating via the Internet. Note that the communicator 81 may be capable of receiving the above-described allowable range R1 and profile curve PR1 from the server device 91 or the information processing terminal 92.

When the determiner 710 determines that a joining condition between the spigot W1a of the pipe W1 and the socket W2a of the joint-target pipe W2 is abnormal, the signal output part 721 generates a control signal for stopping movement of the pipe grasping parts 31 and 32 and outputs the control signal to the movement part 36, and also transmits, via the communicator 81, a notification to the information processing terminal 92 that the joining condition is abnormal. Thus, a worker can confirm via the information processing terminal 92 that the joining condition is abnormal.

The manual operation switcher 73 switches between an automatic operation mode and a manual operation mode. The automatic operation mode is a mode in which the pipe joining device 3 moves the pair of axial movement parts 37 and 38 of the movement part 36 in the axial direction so as to join the spigot W1a of the pipe W1 and the socket W2a of the joint-target pipe W2 in the axial direction, in response to, for example, receiving a start operation instruction for the movement part 36 of the pipe joining device 3 from the information processing terminal 92. Note that in the automatic operation mode, the above-described joining condition determination processing S140 (see FIG. 16) is executed. The manual operation mode is a mode in which the pipe joining device 3 enables manual operation of the movement part 36 of the pipe joining device 3, in response to, for example, receiving an operation instruction for the movement part 36 of the pipe joining device 3 from the information processing terminal 92. The operation instruction in the manual operation mode includes, for example, a pull-out operation instruction for moving the pair of axial movement parts 37 and 38 of the movement part 36 in the axial direction so that the spigot W1a of the pipe W1 and the socket W2a of the joint-target pipe W2 are separated in the axial direction. Not limited thereto, operation instructions other than the pull-out operation instruction may also be available in the manual operation mode.

The manual operation switcher 73 switches the operation mode to the manual operation mode when the signal output part 72 outputs, to the movement part 36, a control signal for stopping movement of the pair of pipe grasping parts 31 and 32.

The operation instruction receiver 74 generates a control signal in accordance with an operation instruction to the movement part 36 by the worker and outputs the control signal to the movement part 36. Specifically, the operation instruction receiver 74 generates a control signal for actuating the pair of axial movement parts 37 and 38 in the movement part 36 in the automatic operation mode in response to receiving a start operation instruction from the information processing terminal 92.

When an abnormality in the joining condition occurs, the worker can confirm via the information processing terminal 92 that the joining condition is abnormal, as described above. In response to this, the worker performs an operation on the information processing terminal 92 for transmitting a pull-out operation instruction. In response to this operation, the information processing terminal 92 transmits the pull-out operation instruction to the pipe joining device 3. Furthermore, when an abnormality in the joining condition occurs, the manual operation switcher 73 switches the operation mode to the manual operation mode. When the manual operation mode is entered, the operation instruction receiver 74, in response to receiving the pull-out operation instruction from the information processing terminal 92, generates a pull-out control signal for moving the pair of axial movement parts 37 and 38 of the movement part 36 in the axial direction so that the spigot W1a of the pipe W1 and the socket W2a of the joint-target pipe W2 are separated in the axial direction. The operation instruction receiver 74 outputs the generated pull-out control signal to the movement part 36.

When the pull-out control signal is input from the operation instruction receiver 74, the movement part 36 moves the pair of axial movement parts 37 and 38 in the axial direction so that the spigot W1a of the pipe W1 and the socket W2a of the joint-target pipe W2 are separated in the axial direction. As a result, the spigot W1a of the pipe W1 can be detached from the socket W2a of the joint-target pipe W2.

In the pipe joining device 3 and the pipe joining method using the pipe joining device 3 described above, when a control signal for stopping movement of the pair of pipe grasping parts 31 and 32 is output to the movement part 36, the manual operation mode is entered, in which the movement part 36 is operated based on an operation instruction to the movement part 36 by the worker. Thus, for example, the detachment work of detaching the spigot W1a of the pipe W1 from the socket W2a of the joint-target pipe W2 can be performed by the operation instruction to the movement part 36 by the worker. Therefore, there is no need to remove the pair of pipe grasping parts 31 and 32 from the spigot W1a of the pipe W1 and perform the detachment work manually by the worker. As a result, it is possible to efficiently perform the joining work between the spigot W1a of the pipe W1 and the socket W2a of the joint-target pipe W2.

Furthermore, in the pipe joining device 3 and the pipe joining method using the pipe joining device 3 described above, when the manual operation mode is entered, the operation instruction receiver 74 generates a control signal in accordance with an operation instruction from the worker. Only the control signal for the movement part 36 generated by the operation instruction receiver 74 is output to the movement part 36. Therefore, the pipe joining device 3 does not perform the joining work between the spigot W1a of the pipe W1 and the socket W2a of the joint-target pipe W2 by a control signal other than the control signal generated in accordance with the operation instruction from the worker. As a result, it is possible to reliably perform the detachment work between the spigot W1a of the pipe W1 and the socket W2a of the joint-target pipe W2.

### [Embodiment 4]

### (Schematic Configuration)

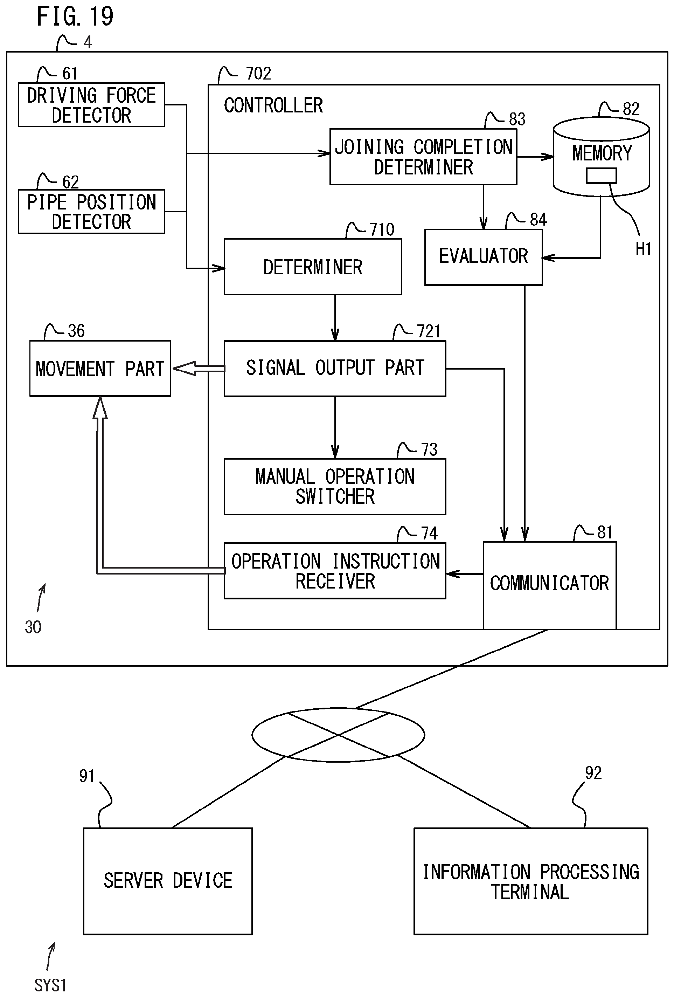

FIG. 19 is a functional block diagram showing a schematic configuration of the pipe moving mechanism 30 of a pipe joining device 4 according to a fourth embodiment. The pipe joining device 4 according to the fourth embodiment differs from the pipe joining device 3 according to the third embodiment in that the pipe joining device 4 performs evaluation of the joining condition. In the following description, the same reference numerals are assigned to the same components as in the third embodiment, and the description thereof is omitted. Only the parts that differ from the third embodiment will be described.

As shown in FIG. 19, the pipe joining management system SYS1 includes the pipe joining device 4, the information processing terminal 92, and the server device 91. A controller 702 includes the determiner 710, the signal output part 721, the manual operation switcher 73, the operation instruction receiver 74, a memory 82, a joining completion determiner 83, and an evaluator 84.

The memory 82 stores a history H1 that includes, during a period from start of joining between the spigot W1a of the pipe W1 and the socket W2a of the joint-target pipe W2 to completion of the joining, each position of the pipe W1 detected by the pipe position detector 62 and a driving force of the movement part 36 detected by the driving force detector 61 at each of the positions.

The joining completion determiner 83 determines completion of joining between the spigot W1a of the pipe W1 and the socket W2a of the joint-target pipe W2. Specifically, the joining completion determiner 83 determines whether the pair of pipe grasping parts 31 and 32 in the movement part 36 has moved to the movement completion position PS2. When the pair of pipe grasping parts 31 and 32 has moved to the movement completion position PS2, the joining completion determiner 83 determines that joining between the spigot W1a of the pipe W1 and the socket W2a of the joint-target pipe W2 has been completed. The joining completion determiner 83 also associates each position of the pipe W1 detected by the pipe position detector 62 with the driving force of the movement part 36 detected by the driving force detector 61 at each of the positions, and adds the association to the history H1 in the memory 82.

When the joining completion determiner 83 determines that joining between the spigot W1a of the pipe W1 and the socket W2a of the joint-target pipe W2 has been completed, the evaluator 84 evaluates the joining condition between the spigot W1a of the pipe W1 and the socket W2a of the joint-target pipe W2 based on the history H1 stored in the memory 82.

The evaluator 84 determines, for example, whether the driving force associated with each position of the pipe W1 during a period from start of joining between the spigot W1a of the pipe W1 and the socket W2a of the joint-target pipe W2 to completion of the joining in the history H1 falls within the allowable range R1 of the driving force shown by hatching in FIG. 17.

The evaluator 84 may evaluate the joining condition as being in a normal joining state when the driving force associated with each position of the pipe W1 falls within the allowable range R1 of the driving force shown by hatching in FIG. 17. The evaluator 84 may output, as the evaluation result, a score calculated based on a degree of deviation of the driving force associated with each position of the pipe W1 from the profile curve PR1. The score may be a real number from 0 to 1. The score may be a multi-level evaluation having three levels or four or more levels.

The evaluator 84 transmits the evaluation result of the joining condition to at least one of the server device 91 and the information processing terminal 92 via the communicator 81. The evaluator 84 may also transmit the history H1 to at least one of the server device 91 and the information processing terminal 92.

In the pipe joining device 4 and the pipe joining method using the pipe joining device 4 described above, the evaluator 84 evaluates the joining condition between the spigot W1a of the pipe W1 and the socket W2a of the joint-target pipe W2 based on the history H1 of the driving force of the movement part 36 detected by the driving force detector 61 during a period from start of joining between the spigot W1a of the pipe W1 and the socket W2a of the joint-target pipe W2 to completion of the joining. That is, the evaluator 84 comprehensively evaluates the joining condition inside the socket W2a of the joint-target pipe W2 based on the history of the driving force of the movement part 36 after completion of joining between the spigot W1a of the pipe W1 and the socket W2a of the joint-target pipe W2. Therefore, not only can a determination based on the joining condition during the joining work be performed, but the joined state between the spigot W1a of the pipe W1 and the socket W2a of the joint-target pipe W2 can also be evaluated. As a result, it is possible to efficiently perform the joining work between the spigot W1a of the pipe W1 and the socket W2a of the joint-target pipe W2.

### (Other Embodiments)

Although embodiments of the present disclosure have been described above, the above-described embodiments are merely examples for carrying out the present disclosure. Therefore, the present disclosure is not limited to the above-described embodiments, and the above-described embodiments can be appropriately modified and implemented without departing from the subject matter of the present disclosure.

In the above embodiments, the attachment member driving part 13 is a hydraulic cylinder, for example. However, the attachment member driving part may be an actuator that can extend and retract, such as a piezoelectric element. The attachment member driving part may have any configuration as long as it is configured to generate a driving force that can switch the pipe attachment parts between the open state and the closed state.

In the above embodiments, the pipe moving mechanism 30 includes the pair of pipe grasping parts 31 and 32. However, the pipe moving mechanism may include one pipe grasping part, or three or more pipe grasping parts.

In the above embodiments, each of the pair of pipe grasping parts 31 and 32 is an arc-shaped plate member. However, the pair of pipe grasping parts may have any configuration as long as it is configured to grasp the pipe so as to allow movement in the axial direction.

In the above embodiments, the driving force detector 61 detects the driving force of the movement part 36 when the pipe grasping parts 31 and 32 are moved in the axial direction. However, the driving force detector may detect the driving force of the movement part when the joint-target pipe attachment part is moved in the axial direction.

In the above embodiments, the pipe joining device 1 joins the spigot W1a of the pipe W1 and the socket W2a of the joint-target pipe W2 to each other so that the axis L1 of the spigot W1a of the pipe W1 coincides with the axis L2 of the socket W2a of the joint-target pipe W2. However, the pipe joining device may join the spigot of the pipe and the socket of the joint-target pipe to each other so that the axis of the spigot of the pipe intersects with the axis of the socket of the joint-target pipe. That is, the pipe joining device may join the pipe and the joint-target pipe which are in a bent state to each other.

In the above embodiments, the driving force detector 61 detects the driving force of the movement part 36 when the axial movement part 37 moves the pipe grasping part 31 in the axial direction. However, the driving force detector may detect the driving force of either one of the pair of axial movement parts or may detect the driving force of both the axial movement parts.

In the above embodiments, although not specifically described, the pipe joining device 1 may include a pipe holder that holds the pipe W1. The pipe holder may be used to align the pipe W1 and the pipe W2.

In the above embodiments, the pipe moving mechanism 30 moves the spigot W1a of the pipe W1 to the socket W2a of the joint-target pipe W2. However, the pipe moving mechanism may move the socket of the joint-target pipe relative to the spigot of the pipe. That is, the movement part of the pipe moving mechanism may move the joint-target pipe attachment part so as to draw it closer to the pair of grasping parts that grasps the spigot side of the pipe. The pipe moving mechanism only needs to be configured to allow movement of at least one of the spigot of the pipe and the socket of the joint-target pipe.

In the above embodiments, the pipe joining device 1 is carried by the work machine M into the trench where the pipe W1 is to be laid, and attached to the joint-target pipe W2. However, the pipe joining device may be carried into the trench with being attached to the spigot of the pipe. Furthermore, the pipe joining device may be attached to each of the socket of the joint-target pipe and the spigot of the pipe. In such a case, the pipe joining device, which is to be attached to the spigot of the pipe, may be carried into the trench with being attached to the spigot of the pipe.

In the second and third embodiments, the pipe position detector 62 detects the movement amount of the axial movement part 37. However, the pipe position detector may detect the movement amount of either one of the pair of axial movement parts or may detect the movement amounts of both the axial movement parts.

In the second to fourth embodiments, the determiner 710 determines whether the driving force detected by the driving force detector 61 at the position of the pipe W1 detected by the pipe position detector 62 falls within the allowable range R1 of the driving force. However, in the pipe joining device and the pipe joining method using the pipe joining device, the determiner may determine that the joining condition between the spigot of the pipe and the socket of the joint-target pipe is abnormal when a rate of change of the driving force detected by the driving force detector falls outside an allowable range of the rate of change of the driving force. The allowable range of the rate of change of the driving force refers to a rate of change of the driving force per unit movement distance of the pipe that is defined based on the position of the pipe.

Specifically, the determiner calculates a rate of change of the driving force per unit movement distance of the pipe based on the position of the pipe detected by the pipe position detector and the driving force detected by the driving force detector at that position of the pipe. The determiner determines that the joining condition between the spigot of the pipe and the socket of the joint-target pipe is abnormal when the calculated rate of change of the driving force falls outside the allowable range of the rate of change of the driving force.

In the pipe joining device and the pipe joining method using the pipe joining device described above, when joining the spigot W1a of the pipe W1 and the socket W2a of the joint-target pipe W2, the joining condition between the spigot W1a of the pipe W1 and the socket W2a of the joint-target pipe W2 is determined by the rate of change of the driving force for each unit movement distance of the pipe W1 relative to the joint-target pipe W2. That is, the determiner determines the joining condition between the socket W2a of the joint-target pipe W2 and the spigot W1a of the pipe W1 that cannot be visually confirmed during the joining work, by the rate of change of the driving force corresponding to the joining stage between the socket W2a of the joint-target pipe W2 and the spigot W1a of the pipe W1. Therefore, it is possible to accurately determine, in real time during the joining work between the spigot W1a of the pipe W1 and the socket W2a of the joint-target pipe W2, whether there is a joining abnormality between the spigot W1a of the pipe W1 and the socket W2a of the joint-target pipe W2. As a result, it is possible to efficiently perform the joining work between the spigot W1a of the pipe W1 and the socket W2a of the joint-target pipe W2.

Furthermore, the determiner may determine the joining condition based on one of a predetermined upper limit value or a predetermined lower limit value of the driving force or the rate of change thereof. That is, the determiner may determine that the joining condition between the spigot of the pipe and the socket of the joint-target pipe is abnormal when the driving force or the rate of change thereof is greater than or equal to the predetermined upper limit value of the driving force or the rate of change thereof. Furthermore, the determiner may determine that the joining condition between the spigot of the pipe and the socket of the joint-target pipe is abnormal when the driving force or the rate of change thereof is less than or equal to the predetermined lower limit value of the driving force or the rate of change thereof.

In the third embodiment, the communicator 81 is capable of receiving the above-described allowable range R1 and profile curve PR1 from the server device 91 or the information processing terminal 92. However, in the first to fourth embodiments, the above-described allowable range and profile curve may be stored in advance in a read-only memory of the pipe joining device.

In the third and fourth embodiments, the operation instruction receiver 74 receives an operation instruction from the information processing terminal 92. However, the operation instruction receiver may acquire an operation instruction in accordance with a button operation on a control panel provided on the pipe joining device.

In the third embodiment, only the control signal for the movement part 36 generated by the operation instruction receiver 74 is output to the movement part 36. However, a signal other than the control signal for the movement part generated by the operation instruction receiver may be output to the movement part. For example, a data signal may be output to the movement part.

In the third embodiment, when the manual operation mode is entered, the operation instruction receiver 74, in response to receiving the pull-out operation instruction from the information processing terminal 92, generates a pull-out control signal for moving the pair of axial movement parts 37 and 38 of the movement part 36 in the axial direction so that the spigot W1a of the pipe W1 and the socket W2a of the joint-target pipe W2 are separated in the axial direction. However, the operation instruction receiver may generate a restart control signal for actuating the pair of axial movement parts of the movement part again in the automatic operation mode, in response to receiving a restart operation instruction, in response to receiving a start operation instruction from the information processing terminal. Note that when the information processing terminal transmits the restart operation instruction, the information processing terminal may prompt a worker for confirmation.

In the second to fourth embodiments, although not specifically described, the determiner and the joining completion determiner may determine, by a contact sensor, completion of joining between the spigot of the pipe and the socket of the joint-target pipe. The contact sensor is provided, for example, at a position where contact is made when the spigot of the pipe and the socket of the joint-target pipe have come within a predetermined distance of each other. The contact sensor can be constituted by, for example, a limit switch.

### INDUSTRIAL APPLICABILITY

The present disclosure is applicable to a pipe joining device for joining a spigot of a pipe to a socket of a joint-target pipe to be joined to the pipe.

### REFERENCE SIGNS LIST

- 1, 2, 3, 4: pipe joining device
- 10: joint-target pipe attachment part
- 11, 12: attachment member
- 11a, 12a: pipe attachment part
- 11b, 12b: driving force input part
- 13: attachment member driving part
- 30: pipe moving mechanism
- 31, 32: pipe grasping part
- 33, 34: connector
- 36: movement part
- 37, 38: axial movement part
- 39: movement support
- 61: driving force detector
- 62: pipe position detector
- 70, 700, 701, 702: controller
- 71, 710: determiner
- 72, 721: signal output part
- 73: manual operation switcher
- 74: operation instruction receiver
- 81: communicator
- 82: memory
- 83: joining completion determiner
- 84: evaluator
- W1: pipe
- W1a: spigot
- W1b: straight pipe portion
- W1c: spigot protrusion
- W2: joint-target pipe
- W2a: socket
- W2b: straight pipe portion
- M: work machine
- Ma: arm
- PS1: movement start position
- PS2: movement completion position
- X: grasping device
- T: support
- L1, L2: axis

## Claims

1. A pipe joining device for joining a spigot of a pipe having the spigot and a socket to a socket of a joint-target pipe having a spigot and the socket, the pipe joining device comprising:
a joint-target pipe attachment part to be attached to a socket side of the joint-target pipe;
pipe grasping parts configured to grasp a spigot side of the pipe;
a movement part configured to move at least one of the joint-target pipe attachment part and the pipe grasping parts in an axial direction so as to join the spigot of the pipe and the socket of the joint-target pipe to each other in the axial direction;
a driving force detector configured to detect a driving force of the movement part during movement of at least one of the joint-target pipe attachment part and the pipe grasping parts in the axial direction; and
a determiner configured to determine a joining condition between the spigot of the pipe and the socket of the joint-target pipe based on the driving force of the movement part detected by the driving force detector.

2. The pipe joining device according to claim 1, further comprising
a pipe position detector configured to detect a position of the pipe relative to the joint-target pipe,
wherein the determiner is configured to determine, based on an allowable range of the driving force that is defined for each position of the pipe, that the joining condition between the spigot of the pipe and the socket of the joint-target pipe is abnormal when the driving force detected by the driving force detector at the position of the pipe detected by the pipe position detector falls outside the allowable range of the driving force.

3. The pipe joining device according to claim 1, further comprising
a pipe position detector configured to detect a position of the pipe relative to the joint-target pipe,
wherein the determiner is configured to determine, based on an allowable range of a rate of change of the driving force per unit movement distance of the pipe, the allowable range being defined based on the position of the pipe, that the joining condition between the spigot of the pipe and the socket of the joint-target pipe is abnormal when the rate of change of the driving force per unit movement distance of the pipe that is calculated based on the position of the pipe detected by the pipe position detector and the driving force detected by the driving force detector at the position of the pipe falls outside the allowable range of the rate of change of the driving force.

4. The pipe joining device according to any one of claims 1 to 3, further comprising
a signal output part configured to output a control signal to the movement part,
wherein the signal output part is configured to output, to the movement part, a control signal for stopping movement of the joint-target pipe attachment part and the pipe grasping parts when the determiner determines that the joining condition between the spigot of the pipe and the socket of the joint-target pipe is abnormal.

5. The pipe joining device according to claim 4, further comprising
an operation instruction receiver configured to generate a control signal in accordance with an operation instruction to the movement part by a worker; and
a manual operation switcher configured to switch an operation mode to a manual operation mode that enables the operation instruction receiver to output the control signal to the movement part in accordance with the operation instruction,
wherein the manual operation switcher is configured to switch the operation mode to the manual operation mode when the signal output part outputs, to the movement part, the control signal for stopping movement of the joint-target pipe attachment part and the pipe grasping parts.

6. The pipe joining device according to claim 5, wherein
the manual operation switcher is configured to enable only the control signal for the movement part generated by the operation instruction receiver to be output to the movement part when the manual operation mode is entered.

7. The pipe joining device according to claim 1, further comprising:
a joining completion determiner configured to determine completion of joining between the spigot of the pipe and the socket of the joint-target pipe; and
an evaluator configured to evaluate the joining condition between the spigot of the pipe and the socket of the joint-target pipe based on a history of the driving force of the movement part detected by the driving force detector during a period from start of joining between the spigot of the pipe and the socket of the joint-target pipe to completion of the joining,
wherein the evaluator evaluates the joining condition between the spigot of the pipe and the socket of the joint-target pipe when the joining completion determiner determines that the joining between the spigot of the pipe and the socket of the joint-target pipe has been completed.

8. A method for joining pipes for joining a spigot of a pipe to a socket of a joint-target pipe to be joined to the pipe, the method comprising:
a joint-target pipe attaching step of attaching a joint-target pipe attachment part to a socket side of the joint-target pipe;
a pipe grasping step of grasping, by pipe grasping parts, a spigot side of the pipe;
a moving step of moving, by a movement part, at least one of the joint-target pipe attachment part and the pipe grasping parts in an axial direction so as to join the spigot of the pipe and the socket of the joint-target pipe to each other in the axial direction;
a driving force detecting step of detecting, by a driving force detector, a driving force of the movement part during movement of at least one of the joint-target pipe attachment part and the pipe grasping parts in the axial direction; and
a determining step of determining, by a determiner, a joining condition between the spigot of the pipe and the socket of the joint-target pipe based on the driving force of the movement part detected by the driving force detector.

9. The method for joining pipes according to claim 8, further comprising
a pipe position detecting step of detecting, by a pipe position detector, a position of the pipe relative to the joint-target pipe,
wherein, in the determining step, the joining condition between the spigot of the pipe and the socket of the joint-target pipe is determined to be abnormal based on an allowable range of the driving force that is defined for each position of the pipe, when the driving force detected by the driving force detector at the position of the pipe detected by the pipe position detector falls outside the allowable range of the driving force.

10. The method for joining pipes according to claim 8, further comprising
a pipe position detecting step of detecting, by a pipe position detector, a position of the pipe relative to the joint-target pipe,
wherein, in the determining step, the joining condition between the spigot of the pipe and the socket of the joint-target pipe is determined to be abnormal based on an allowable range of a rate of change of the driving force per unit movement distance of the pipe, the allowable range being defined based on the position of the pipe, when the rate of change of the driving force per unit movement distance of the pipe that is calculated based on the position of the pipe detected by the pipe position detector and the driving force detected by the driving force detector at the position of the pipe falls outside the allowable range of the rate of change of the driving force.

11. The method for joining pipes according to any one of claims 8 to 10, further comprising
a signal output step of outputting, by a signal output part, a control signal to the movement part,
wherein, in the signal output step, a control signal for stopping movement of the joint-target pipe attachment part and the pipe grasping parts is transmitted to the movement part when the joining condition between the spigot of the pipe and the socket of the joint-target pipe is determined to be abnormal in the determining step.

12. The method for joining pipes according to claim 11, further comprising
a manual operation switching step of switching, by a manual operation switcher, an operation mode to a manual operation mode that enables an operation instruction receiver configured to generate a control signal in accordance with an operation instruction to transmit the control signal to the movement part,
wherein, in the manual operation switching step, the manual operation mode is entered when the signal output part outputs, to the movement part, the control signal for stopping movement of the joint-target pipe attachment part and the pipe grasping parts.

13. The method for joining pipes according to claim 12, wherein, in the manual operation switching step, only the control signal for the movement part generated by the operation instruction receiver is output to the movement part when the manual operation mode is entered.

14. The method for joining pipes according to claim 8, further comprising:
a joining completion determining step of determining, by a joining completion determiner, completion of joining between the spigot of the pipe and the socket of the joint-target pipe; and
an evaluating step of evaluating, by an evaluator, the joining condition between the spigot of the pipe and the socket of the joint-target pipe based on a history of the driving force of the movement part detected by the driving force detector during a period from start of joining between the spigot of the pipe and the socket of the joint-target pipe to completion of the joining,
wherein, in the evaluating step, the joining condition between the spigot of the pipe and the socket of the joint-target pipe is evaluated when the joining between the spigot of the pipe and the socket of the joint-target pipe is determined to have been completed in the joining completion determining step.
